(19) Europäisches Patentamt
European Patent Office
Office européen des brevets

(11) **EP 4 576 776 A1**

(12) **EUROPEAN PATENT APPLICATION**

(43) Date of publication:
**25.06.2025 Bulletin 2025/26**

(21) Application number: **23307259.4**

(22) Date of filing: **19.12.2023**

(51) International Patent Classification (IPC):
*H04N 19/182* (2014.01)          *H04N 19/186* (2014.01)
*H04N 19/593* (2014.01)

(52) Cooperative Patent Classification (CPC):
**H04N 19/182; H04N 19/186; H04N 19/593**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Beijing Xiaomi Mobile Software Co.,
Ltd.
Beijing 100085 (CN)**

(72) Inventors:
• **ABDOLI, Mohsen**
  **35235 Thorigné-Fouillard (FR)**
• **Ghaznavi Youvalari, Ramin**
  **33900 Tampere (FI)**

(74) Representative: **RVDB Rennes
44 rue Lariboisière
35235 Thorigné-Fouillard (FR)**

(54) **ENCODING/DECODING VIDEO PICTURE DATA**

(57)      The present disclosure relates to the cross-component prediction method of a chroma block of a video picture. Cross-component prediction models are derived based on weighted reference samples in a model template defined around a co-located luma block of the chroma block to be predicted. An analysis template analysis template comprises reconstructed luma samples of a co-located luma block of the chroma block and the reference samples of a model template. The reference samples of the model template are split into at least two sub-sets of reference samples of the analysis template based on at least one detected variation in the reference samples of the analysis template. The weighted reference samples in the model template are obtained by weighing the reference samples of sub-sets of the analysis template that belong to the model template by weighting values, each weighting value being determined based on the content consistency between the reference samples of a sub-set of reference samples of the analysis template belonging to the model template and the reconstructed samples of the co-located luma block of the analysis template.

300

**Fig. 13**

EP 4 576 776 A1

**Description**

<u>FIELD</u>

The present application generally relates to video picture encoding and decoding. Particularly, but not exclusively, the technical field of the present application is related to cross-component prediction of chroma block of a video picture.

<u>BACKGROUND</u>

The present section is intended to introduce the reader to various aspects of art, which may be related to various aspects of at least one exemplary embodiment of the present application that is described and/or claimed below. This discussion is believed to be helpful in providing the reader with background information to facilitate a better understanding of the various aspects of the present application. Accordingly, it should be understood that these statements are to be read in this light, and not as admissions of prior art.

In existing technologies, linear parameters of cross-component prediction models are derived based on reference samples of a L-shaped template around a current block. Cross-component inconsistency refers to a phenomenon, in which a chroma prediction tool relies on a supposed correlation to luma component, on a pre-defined neighborhood of pixels (i.e. template). While on this neighborhood of pixels, the texture might locally vary such that the said correlation is weakened in some areas of the neighborhood. Hence, keep relying on those less-correlated areas for prediction causes coding inefficiency due to the cross-component inconsistency. Cross-component content inconsistencies may appear for example when either or both texture or lighting conditions change around the borders of the current block, or when sample outlier appear or over-sharpness, etc. When cross-component content inconsistencies appear, blindness of the L-shaped template selection might introduce inefficiency to the cross-component prediction models, i.e. applying cross-component prediction model on samples of current block becomes sub-optimal.

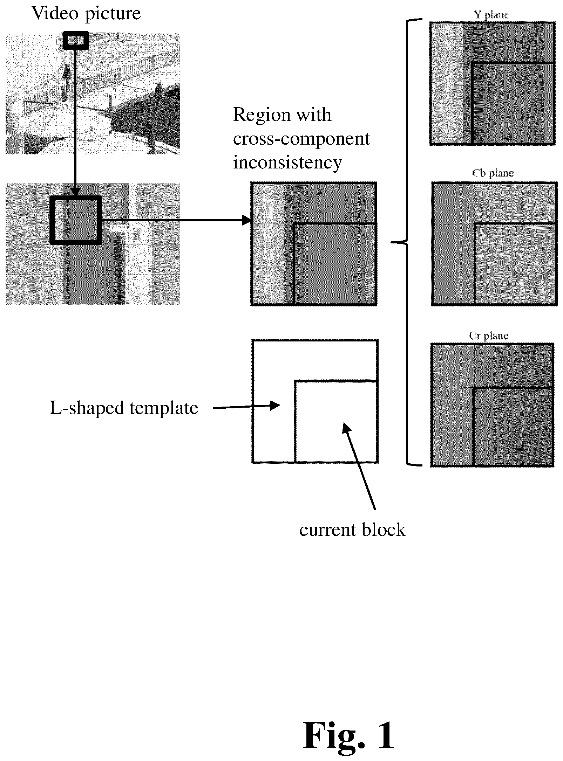

**Figure 1** shows an example of how an object border in a video picture may introduce cross-component content inconsistency. As can be seen, a current block of a video picture is zoomed and a region with cross-component content inconsistency appears in samples of the top-left and left parts of the L-shaped template of the current block. The samples of the luma (Y) and chroma (Cb,Cr) blocks have more content similarities to the top part of the L-shaped template, rather than the top-left and left parts of the L-shaped template, due to the fact that an object is occupying both current block and the samples at the top of current block.

Deriving linear parameters of cross-component prediction models taking into account of content cross-component inconsistencies would improve cross-component prediction efficiency.

At least one exemplary embodiment of the present application has been devised with the foregoing in mind.

<u>SUMMARY</u>

The following section presents a simplified summary of the at least one exemplary embodiment in order to provide a basic understanding of some aspects of the present application. This summary is not an extensive overview of an exemplary embodiment. It is not intended to identify key or critical elements of an exemplary embodiment. The following summary merely presents some aspects of the at least one exemplary embodiment in a simplified form as a prelude to the more detailed description provided elsewhere in the document.

According to a first aspect of the present application, there is provided a method of cross-component predicting of a chroma block of a video picture comprising a luma component and at least one chroma component, the method comprising:

- obtaining an analysis template comprising reference samples as being reconstructed luma samples of a co-located luma block of the chroma block and comprising reference samples of a model template, the model template comprising chroma samples in a chroma L-shaped template around the chroma block and corresponding reference samples as being reconstructed luma samples in a luma L-shaped template defined around the co-located luma block of the chroma block;
- detecting at least one variation of the reference samples of the analysis template, each variation of reference samples indicating a content cross-component inconsistency in the reference samples of the analysis template;
- splitting the reference samples of the analysis template into at least two sub-sets of reference samples based on the at least one detected variation in the reference samples of the analysis template;
- obtaining weighted reference samples of the model template by weighing the reference samples of sub-sets of the analysis template that belong to the model template by weighting values, each weighting value indicating the content consistency between the reference samples of one of the at least one sub-set belonging to the model template and the reconstructed samples of the co-located luma block of the analysis template;
- determining at least one cross-component prediction model based on the weighted reference samples in the model template; and
- predicting the chroma block based on the at least one determined cross-component prediction model.

In some embodiments, a single cross-component prediction model is determined from all weighted reference samples or wherein a cross-component prediction model is determined for each subset based on weighted reference samples corresponding to reference samples of one single sub-set that belong to the model template.

In some embodiments, detecting the at least one variation of the reference samples of the analysis template comprises applying an edge detection filter on the reference samples of the analysis template, and a variation of the reference samples of the analysis template is detected when an edge is detected in the reference samples of the analysis template.

In some embodiments, detecting the at least one variation of the reference samples of the analysis template further comprises calculating edge strength for the at least one detected edge.

In some embodiments, detecting the at least one variation of the reference samples of the analysis samples further comprises partitioning of reference samples of the model template and/or reference samples of the analysis template.

In some embodiments, detecting the at least one variation of the reference samples of the analysis template further comprises block partitioning and filtering the reference samples of the model template.

In some embodiments, detecting at least one variation of the reference samples of the analysis template further comprises modifying the reference samples of the analysis template.

In some embodiments, detecting the at least one variation of the reference samples of the analysis template further comprises modifying the reconstructed chroma samples of the chroma block and/or of the chroma L-shaped template around the chroma block.

In some embodiments, the weighting values are obtained based on comparing the reconstructed luma samples in the model template to the reconstructed luma samples of the co-located luma block of the analysis template.

In some embodiments, a single weighting value is assigned to one sub-set and the single weighting value is assigned to each reference sample of the sub-set.

In some embodiments, the method further comprises signaling an enabling information indicating the at least one cross-component prediction model is determined based on weighted reference samples.

In some embodiments, determining whether determining the at least one cross-component prediction model is based on weighted reference samples is enabled or not, is based on chroma or co-located block characteristics.

According to a second aspect of the present application, there is provided a method of encoding video picture data comprising a method according to the first aspect of the present disclosure.

According to a third aspect of the present application, there is provided a method of decoding video picture data comprising a method according to the first aspect of the present disclosure.

According to a fourth aspect of the present application, there is provided an apparatus comprising means for performing one of the methods according to the first, second and/or third aspect of the present disclosure.

According to a fifth aspect of the present application, there is provided a computer program product including instructions which, when the program is executed by one or more processors, causes the one or more processors to carry out a method according to the first, second and/or third aspect of the present disclosure.

According to a sixth aspect of the present application, there is provided a non-transitory storage medium carrying instructions of program code for executing a method according to the first, second and/or third aspect of the present disclosure.

The specific nature of at least one of the exemplary embodiments as well as other objects, advantages, features and uses of said at least one of exemplary embodiments will become evident from the following description of examples taken in conjunction with the accompanying drawings.

BRIEF DESCRIPTION OF THE DRAWINGS

Reference will now be made, by way of example, to the accompanying drawings which show exemplary embodiments of the present application, and in which:

**Figure 1** shows an example of how an object border in a video picture may introduce cross-component inconsistencies;

**Figure 2** shows an example of coding-tree unit in accordance with HEVC;

**Figure 3** shows an example of partitioning coding units into prediction units in accordance with HEVC;

**Figure 4** shows an example of a CTU division in accordance with WC;

**Figure 5** shows examples of split modes supported in the multi-type tree partitioning in accordance with WC;

**Figure 6** shows a schematic block diagram of a method 100 of encoding a video picture VP in accordance with prior art;

**Figure 7** shows a schematic block diagram of a method 200 of decoding a video picture VP in accordance with prior art;

**Figure 8** shows an example of chroma and luma L-shaped templates for deriving the linear parameters $\alpha$ and $\beta$ of CCLM in accordance with prior art;

**Figure 9** shows example of patterns Sobel filters in accordance with prior art;

**Figure 10** shows examples of neighboring reference samples in accordance with prior art;

**Figure 11** shows an example of the chroma L-shaped template around the chroma block in accordance with prior art;

**Figure 12** shows an example of non-downsampled luma samples used in CCCM in accordance with prior art;

**Figure 13** shows a block diagram of a method 300 of cross-component prediction of a chroma block of a video in accordance with at least one exemplary embodiments of the present disclosure;

**Figure 14** shows an example of a set of reference samples corresponding to a chroma block of a YCbCr video picture in accordance with at least one exemplary embodiments of the present disclosure;

**Figure 15** shows an example of illustration of the method 300 in accordance with exemplary embodiments of the present disclosure;

**Figure 16** shows an example of a set of reference samples in which a variation (an edge) is detected in accordance with exemplary embodiments of the present disclosure;

**Figure 17** illustrates an example of a set of reference samples in which a variation (an edge) is detected in accordance with exemplary embodiments of the present disclosure;

**Figure 18** shows an example of signalling the enabling information in accordance with exemplary embodiments of the present disclosure;

**Figure 19** shows an example of signalling weighting values when the enabling information is active and indicates CCLM is enabled in accordance with exemplary embodiments of the present disclosure;

**Figure 20** shows a block diagram of an example of a system in which various aspects and exemplary embodiments are implemented.

Similar or same elements are referenced with the same reference numbers.

DESCRIPTION OF EXEMPLARY EMBODIMENTS

At least one of the exemplary embodiments is described more fully hereinafter with reference to the accompanying figures, in which examples of at least one of the exemplary embodiments are depicted. An exemplary embodiment may, however, be embodied in many alternate forms and should not be construed as limited to the examples set forth herein. Accordingly, it should be understood that there is no intent to limit exemplary embodiments to the particular forms disclosed. On the contrary, the present application is intended to cover all modifications, equivalents, and alternatives falling within the spirit and scope of the present application.

At least one of the aspects generally relates to video picture encoding and decoding, one other aspect generally relates to transmitting a bitstream provided or encoded and one other aspect relates to receiving/accessing a decoded bitstream.

At least one of the exemplary embodiments is described for encoding/decoding a video picture but extends to the encoding/decoding of video pictures (sequences of pictures) because each video picture is sequentially encoded/decoded as described below.

The at least one exemplary embodiments are described in a context of MPEG standards but they are not limited to MPEG standards such as AVC (ISO/IEC 14496-10 Advanced Video Coding for generic audio-visual services, ITU-T Recommendation H.264, https://www.itu.int/rec/T-REC-H.264-202108-P/en), EVC (ISO/IEC 23094-1 Essential video coding), HEVC (ISO/IEC 23008-2 High Efficiency Video Coding, ITU-T Recommendation H.265, https://www.itu.int/rec/T-REC-H.265-202108-P/en, VVC (ISO/IEC 23090-3 Versatile Video Coding, ITU-T Recommendation H.266, https://www.itu.int/rec/T-REC-H.266-202008-I/en but may be applied to other standards and recommendations such as AV1 (AOMedia Video 1, http://aomedia.org/av1 /specification/) for example. Moreover, the at least one exemplary embodiments are not limited to the ongoing standardization activity at JVET, called Enhanced Compression Model (ECM, Algorithm description of Enhanced Compression Model). The architecture of ECM is almost entirely based on VVC, except that it has several newly introduced tools integrated in it.

The at least one exemplary embodiment may apply to pre-existing or futuredeveloped, and extensions of any such standards and recommendations.

Unless indicated otherwise, or technically precluded, the aspects described in the present application may be used individually or in combination.

A pixel corresponds to the smallest display unit on a screen, which can be composed of one or more sources of light (1 for monochrome screen or 3 or more for colour screens).

A video picture, also denoted frame or picture frame, comprises at least one component (also called picture component, or channel) determined by a specific picture/video format which specifies all information relative to pixel values and all information which may be used by a display unit and/or any other device to display and/or to decode video picture data related to said video picture.

A video picture comprises at least one component usually expressed in the shape of an array of samples.

A monochrome video picture comprises a single component and a color video picture may comprise three components.

For example, a color video picture may comprise a luminance component (Y) and two chrominance components (Cb, Cr) when the picture/video format is the well-known (Y,Cb,Cr) format or equivalently a luma component (Y') and two chrominance components (Cb,Cr). Note, the luma component Y' may be derived by applying a gamma correction on the luminance component Y. A color picture may also comprise three color components (one for Red, one for Green and one for Blue) when the picture/video format is the well-known (R,G,B) format.

Each component of a video picture may comprise a number of samples relative to a number of pixels of a screen on which the video picture is intended to be display. In variants, the number of samples comprised in a component may be a multiple (or fraction) of a number of samples comprised in another component of a same video picture.

For example, in the case of a video format comprising a luminance component and two chrominance components like the (Y,Cb,Cr) format, dependent on the color format considered. The chrominance component may contain half the number of samples in width and/or height, relative to the luminance component.

The YCbCr color space is a family of color spaces used in digital photography and video systems. It is defined by a mathematical coordinate transformation from an associated RGB primaries and white point.

In the context of video compression, the YCbCr color space is used to reduce the amount of data required to represent a video picture while maintaining a high level of visual quality. This is achieved by separating the luminance information (Y) from the chrominance information (Cb and Cr) and then applying different compression techniques to each component.

In video compression, chroma subsampling is a technique used to reduce the amount of data required to represent a video picture while maintaining a high level of visual quality. Chroma subsampling is achieved by separating the luma information (Y') from the chrominance information (Cb and Cr) and then applying different compression techniques to each component. The Y' component is usually compressed using lossless compression techniques, while the Cb and Cr components are compressed using lossy compression techniques. This approach is effective because the human eye is more sensitive to changes in luminance than to changes in chrominance. There are several chroma subsampling formats, including 4:4:4, 4:2:2, and 4:2:0. In the 4:4:4 format, there is no subsampling, and all information of both luminance and chrominance data are represented entirely. In a four by two array of pixels, 4:2:2 has half the chroma of 4:4:4, and 4:2:0 has a quarter of the color information available. The 4:2:2 signal will have half the sampling rate horizontally but will maintain full sampling vertically. 4:2:0, on the other hand, will only sample colors out of half the pixels on the first row and ignore the second row of the sample completely.

The at least one exemplary embodiments are described by considering the YCbCr format 4:2:0 but the at least one exemplary embodiment is not limited to a particular picture/video format but

A sample is the smallest visual information unit of a component composing a video picture. A sample may be, for example a luma or chrominance sample or a colour sample of a (R, G, B) format.

In the following, luma samples are defined as values of the luminance component of a video picture (or equivalently of the luminance (Y) component), and chroma samples are defined as values of the chrominance component (Cb or Cr).

A pixel value is the value of a pixel of a screen. A pixel value may be represented by one sample for monochrome video picture and by multiple co-located samples for color video picture. Co-located samples associated with a pixel mean samples corresponding to the location of a pixel in the screen.

It is common to consider a video picture as being a set of pixel values, each pixel being represented by at least one sample.

A block of a video picture is a set of samples of one component of the video picture. A luma block is a set of at least one luma sample and a luma block is a set of at least one chroma sample. A luma or chroma block may be considered when the picture/video format is the well-known (Y,Cb,Cr) or (Y',Cb,Cr) format, or a block of at least one color sample when the picture/video format is the well-known (R, G, B) format.

In the prior art, video compression systems such as HEVC or VVC low-level and high-level picture partitioning are provided to divide a video picture into picture areas so-called Coding-Tree Units (CTU) which size may be typically between 16x16 and 64x64 pixels for HEVC and 32x32, 64x64, or 128x128 pixels for VVC.

The CTU division of a video picture forms a grid of fixed size CTUs, namely a CTU grid, which upper and left bounds spatially coincide with the top and left borders of the video picture. The CTU grid represents a spatial partition of the video picture.

In VVC and HEVC, the CTU size (CTU width and CTU height) of all the CTUs of a CTU grid equals a same default CTU size (default CTU width **CTU DW** and default CTU height **CTU DH**). For example, the default CTU size (default CTU height, default CTU width) may equal to 128 (**CTU DW=CTU DH**=128). A default CTU size (height, width) is encoded into the bitstream, for example at a sequence level in the Sequence Parameter Set (SPS).

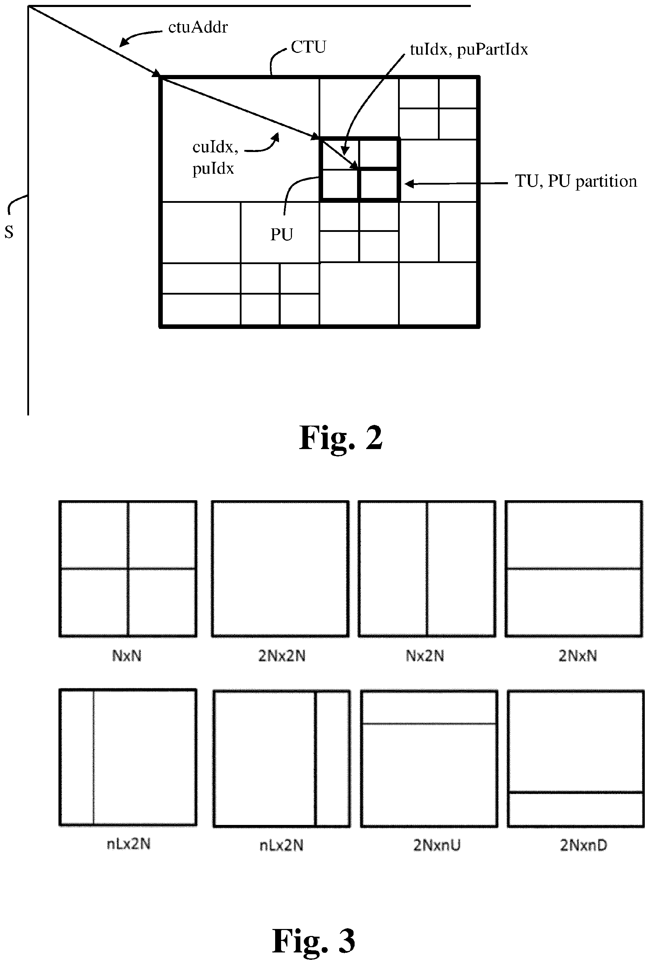

The spatial position of a CTU in a CTU grid is determined from a CTU address **ctuAddr** defining a spatial position of the top-left corner of a CTU from an origin. As illustrated on **Figure 2,** the CTU address may define the spatial position from the top-left corner of a higher-level spatial structure S containing the CTU.

A coding tree is associated with each CTU to determine a tree-division of the CTU.

As illustrated on **Figure 2,** in HEVC, the coding tree is a quad-tree division of a CTU, where each node is called a Coding Unit (CU). The spatial position of a CU in the video picture is defined by a CU index **cuIdx** indicating a spatial position from the top-left corner of the CTU. A CU is spatially partitioned into one or more Prediction Units (PU). The spatial position of a PU in the video picture VP is defined by a PU index **puIdx** defining a spatial position from the top-left corner of the CTU and the spatial position of an element of a partitioned PU is defined by a PU partition index **puPartIdx** defining a spatial position from the top-left corner of a PU. Each PU is assigned some intra or inter prediction data.

The coding mode intra or inter is assigned on the CU level. That means that a same intra/inter coding mode is assigned to each PU of a CU, though the prediction parameters varying from PU to PU.

A CU may be also spatially partitioned into one or more Transform Units (TU), according to a quad-tree called the transform tree. Transform Units are the leaves of the transform tree. The spatial position of a TU in the video picture is defined by a TU index **tuIdx** defining a spatial position from the top-left corner of a CU. Each TU is assigned some transform parameters. The transform type is assigned on the TU level, and 2D separate transform is performed at TU level during the coding or decoding of a picture block.

The PU Partition types existing in HEVC are illustrated on **Figure 3.** They include square partitions (2Nx2N and NxN), which are the only ones used in both Intra and Inter predicted CUs, symmetric non-square partitions (2NxN, Nx2N, used only in Inter predicted CUs), and asymmetric Partitions (used only in Inter predicted CUs). For instance, the PU type 2NxnU stands for an asymmetric horizontal partitioning of the PU, where the smaller partition lies on the top of the PU. According to another example, PU type 2NxnL stands for an asymmetric horizontal partitioning of the PU, where the smaller partition lies on the top of the PU.

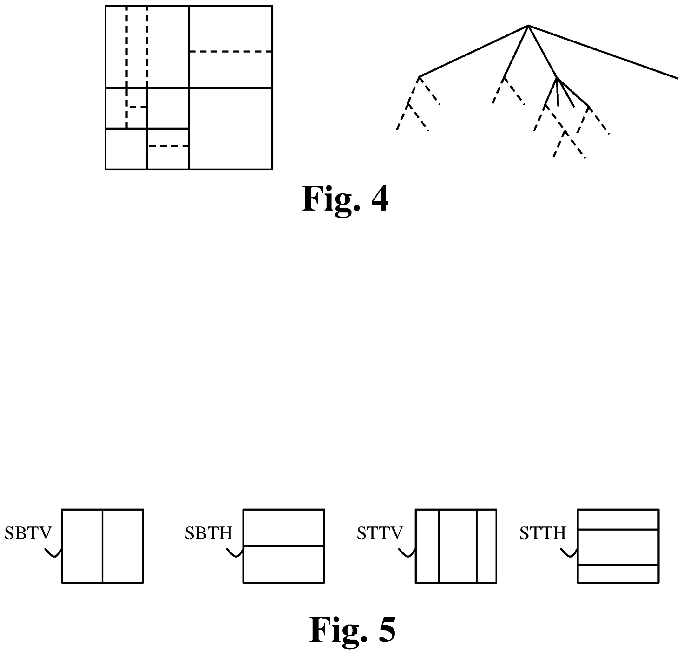

As illustrated on **Figure 4,** in VVC, the coding tree starts from a root node, i.e., the CTU. Next, a quad-tree (or quaternary tree) split divides the root node into 4 nodes corresponding to 4 sub-blocks of equal sizes (solid lines). Next, the quaternary tree (or quad-tree) leaves can then be further partitioned by a so-called multi-type tree, which involves a binary or ternary split according to one of 4 split modes illustrated on **Figure 5.** These split types are the vertical and horizontal binary split modes, noted SBTV and SBTH and the vertical and horizontal ternary split modes SPTTV and STTH.

The leaves of the coding tree of a CTU are CU in the case of a joint coding tree shared by luma and chroma components.

Contrary to HEVC, in VVC, in most cases, CU, PU and TU have equal size, which means coding units are generally not partitioned into PU or TU, except in some specific coding modes.

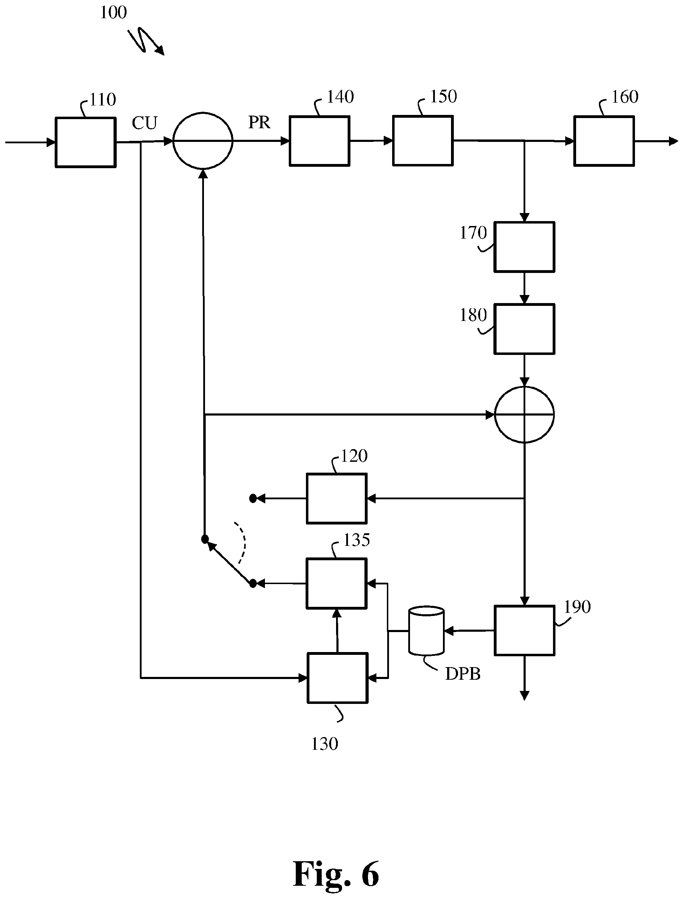

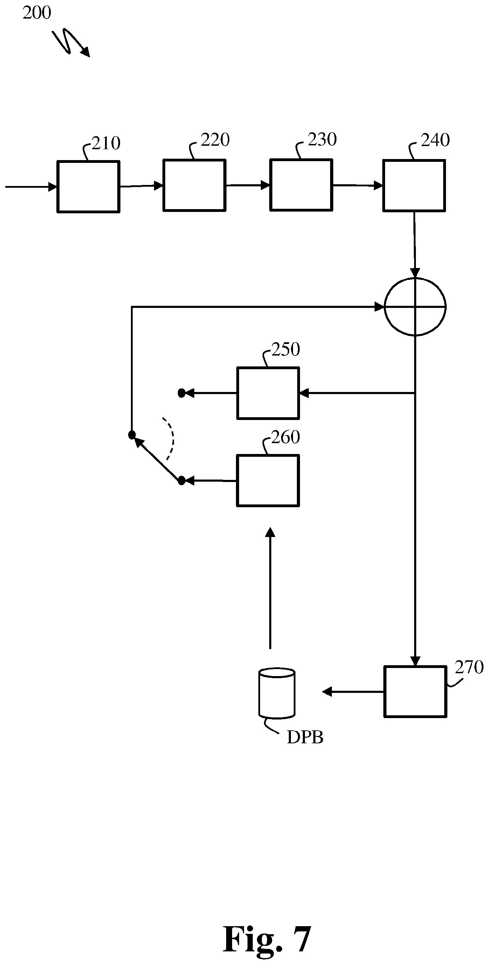

**Figures 6** and **7** provide an overview of video encoding/decoding methods used in current video standard compression systems like HEVC or VVC for example.

**Figure 6** shows a schematic block diagram of a method 100 of encoding a video picture VP in accordance with prior art.

In block 110, a video picture VP is partitioned into blocks of samples and partitioning information data is signaled into a bitstream. Each block comprises samples of one component of the video picture VP. The blocks thus comprise samples of each component defining the video picture VP.

For example, in HEVC, a picture is divided into Coding Tree Units (CTU). Each CTU may be further subdivided using a quad-tree division, where each leaf of the quad-tree is denoted a Coding Unit (CU). The partitioning information data may then comprise data describing the CTU and the quad-tree subdivision of each CTU.

Each block of samples, in short block, may then be either a CU (if the CU comprises a single PU) or a PU of a CU.

Each block is encoded along an encoding loop also called "in loop" using either an intra or inter prediction mode.

Intra prediction (block 120) used intra prediction data. Intra prediction consists in predicting a current block by means of an intra-predicted block based on already encoded, decoded and reconstructed samples located around the current block, typically on the top and on the left of the current block. Intra prediction is performed in the spatial domain.

Reconstructed samples means samples (luma or chroma sample) obtained after applying at least one processing on original samples (luma or chroma samples) such as a pre-processing, an encoding (e.g. an intra or inter prediction-based encoding), a decoding (e.g. an intra or inter prediction-based encoding) or a post-processing such a post-filtering. A reconstructed sample has undergone the prediction and residual coding stages, therefore at a given stage of coding, a same so-called "reconstructed" value is accessible both at the encoder and decoder sides. Moreover, reconstructed samples might or might not have been filtered yet using loop filters (e.g. Deblocking etc.).

In inter-prediction mode, motion estimation (block 130) and motion compensation (135) are performed. Motion estimation searches, in one or more reference video picture(s) used to predictively encode the current video picture, a candidate reference block that is a good predictor of the current block. For instance, a good predictor of the current block is a predictor which is similar to the current block. The output of the motion estimation block 130 is inter-prediction data comprising motion information (typically one or more motion vectors and one or more reference video picture indices) associated to the current block and other information used for obtaining a same predicted block at the encoding/decoding side. Next, motion compensation (block 135) obtains a predicted block by means of the motion vector(s) and reference video picture index (indices) determined by the motion estimation block 130. Basically, the block belonging to a selected reference video picture and pointed to by a motion vector may be used as the predicted block of the current block. Furthermore, since motion vectors are expressed in fractions of integer pixel positions (which is known as sub-pel accuracy motion vector representation), motion compensation generally involves a spatial interpolation of some reconstructed samples of the reference video picture to compute the predicted block.

Prediction information data is signaled into the bitstream. The prediction information may comprise prediction mode (intra or inter or skip), intra/inter prediction data and any other information used for obtaining a same predicted CU at the decoding side.

The method 100 selects one prediction mode (the intra or inter prediction mode) by optimizing a rate-distortion trade-off taking into account the encoding of a prediction residual block calculated, for example, by subtracting a candidate predicted block from the current block, and the signaling of prediction information data required for determining said candidate predicted block at the decoding side.

Usually, the intra and inter prediction modes are set in a list of Most Probable candidate Modes (MPM list) and the best prediction mode is given as being the prediction mode p* for a current block given by:

$$p^* = \underset{p \in P}{\mathrm{Argmin}}\{RD_{cost}(p)\} \quad (1)$$

where $P$ is the MPM list for the current block, $p$ represents a candidate coding mode in that MPM list, $RD_{cost}(p)$ is a rate-distortion cost of candidate prediction mode $p$, typically expressed as:

$$RD_{cost(p)} = D(p) + \lambda \cdot R(p)$$

$D(p)$ is the distortion between the current block and a reconstructed block obtained after encoding/decoding the current block based on the candidate prediction mode p, $R(p)$ is a rate cost associated with the coding of the current block based on the prediction mode $p$, and $\lambda$, is the Lagrange parameter representing the rate constraint for coding the current block and typically computed from a quantization parameter Qp used for encoding the current block.

The current block is usually encoded from a prediction residual block PR. More precisely, a prediction residual block PR is calculated, for example, by subtracting the best predicted block from the current block. The prediction residual block PR is then transformed (block 140) by using, for example, a DCT (discrete cosine transform) or DST (Discrete Sinus transform) type transform, or any other appropriate transform, and the obtained transformed coefficient block is quantized (block 150).

In variant, the method 100 may also skip the transform block 140 and apply quantization (block 150) directly to the prediction residual block PR, according to the so-called transform-skip coding mode.

Quantized transform coefficient block (or quantized prediction residual block) is entropy encoded into the bitstream (block 160).

Next, the quantized transform coefficient block (or the quantized residual block) is de-quantized (block 170) and inverse transformed (180) (or not) as part of the encoding loop, leading to a decoded prediction residual block. The decoded prediction residual block and the predicted block are then combined, typically summed, which provides the reconstructed block.

Other information data may also be entropy encoded in block 160 for encoding a current block of the video picture VP.

In-loop filters (block 190) may be applied to a reconstructed picture (comprising reconstructed blocks) to reduce compression artefacts. Loop filters may apply after all picture blocks are reconstructed. For instance, they consist in deblocking filter, Sample Adaptive Offset (SAO) or adaptive loop filter.

The reconstructed blocks or the filtered reconstructed blocks form a reference picture that may be stored into a decoded picture buffer (DPB) so that it can be used as a reference picture for the encoding of a next current block of the video picture VP, or of a next vide picture to encode.

**Figure 7** shows a schematic block diagram of blocks of a method 200 of decoding a video picture VP in accordance with prior art.

In block 210, partitioning information data, prediction information data and quantized transform coefficient block (or quantized residual block) are obtained by entropy decoding a bitstream of encoded video picture data. For instance, this bitstream has been generated in accordance with the method 100.

Other information data may also be entropy decoded for decoding from the bitstream a current block of the video picture VP.

In block 220, a reconstructed picture is divided into current blocks based on the partitioning information. Each current block is entropy decoded from the bitstream along a decoding loop also called "in loop". Each decoded current block is either a quantized transform coefficient block or quantized prediction residual block.

In block 230, the current block is de-quantized and possibly inverse transformed (block 240), to obtain a decoded prediction residual block.

On the other hand, the prediction information data is used to predict the current block. A predicted block is obtained through its intra prediction (block 250) or its motion-compensated temporal prediction (block 260). The prediction process performed at the decoding side is identical to that of the encoding side.

Next, the decoded prediction residual block and the predicted block are then combined, typically summed, which provides a reconstructed block.

In block 270, in-loop filters may apply to a reconstructed picture (comprising reconstructed blocks) and the reconstructed blocks, or the filtered reconstructed blocks form a reference picture that may be stored into a decoded picture buffer (DPB) as above discussed (**Figure 6**).

In block 130/135 of **Figure 6** or block 260 of **Figure 7,** an inter-predicted block is defined from inter-prediction data associated with the current block (CU or a PU of a CU) of a video picture. This inter-prediction data comprises motion information that may be represented (coded) according to the so-called whole-block-based AMVP mode (Adaptive Motion Vector Prediction) or the so-called whole-block-based merge mode.

Cross-component prediction refers to the process of predicting one color component (such as chrominance component) based on the information from another color component (such as luminance or luma component). The philosophy behind cross-component prediction is to reduce redundancy in the video signal. Instead of independently coding each color component, the encoder predicts one component from another and encodes only the prediction error. Precisely, cross-component prediction perform, for each chrominance component (Cb or Cr) block, a prediction from co-located reconstructed luma samples.

One of existing cross-component prediction models is the so-called Cross-Component Linear Model (CCLM) of VVC. CCLM obtains predicted chroma samples $\text{pred}_C(i, j)$ of chroma samples of a current block (CU) based on downsampled reconstructed luma samples $\text{rec}'_L(i, j)$ of a co-located luma block of the chroma block by using a linear model:

$$\text{pred}_C(i, j) = \alpha \cdot \text{rec}'_L(i, j) + \beta$$

where $\alpha$ and $\beta$ are linear parameters of the linear model.

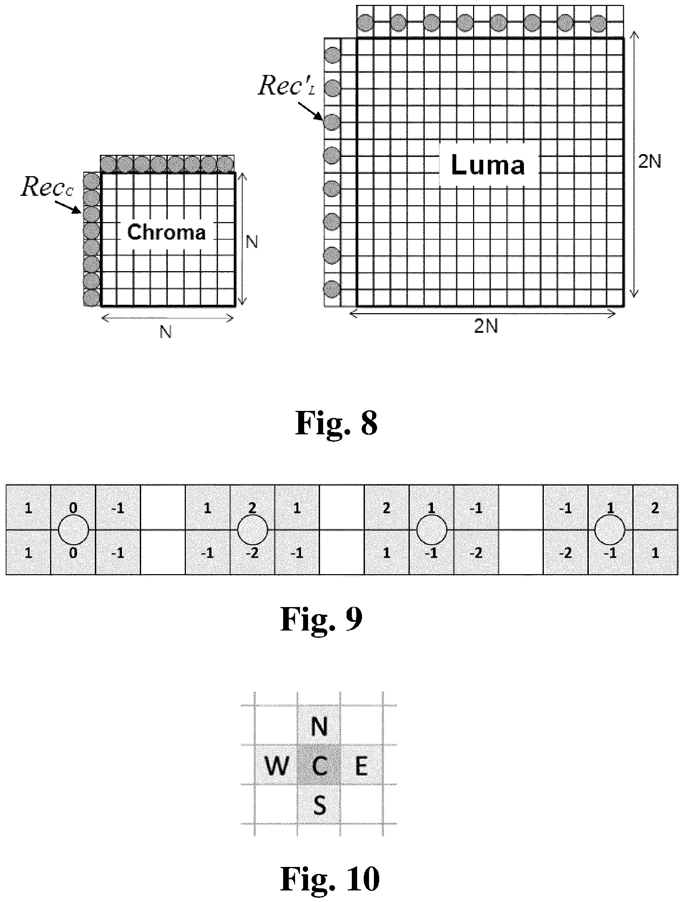

The linear parameters $\alpha$ and $\beta$ are derived based on chroma and reference samples of a model template. The chroma samples of the model template are reconstructed chroma samples $Rec_c$ (i,j) in a chroma L-shaped template around the chroma block (of size NxN) and the reference samples $Rec'_L(i,j)$ of the model template are down-sampled reconstructed luma samples of a luma L-shaped template around the co-located luma block (of size 2Nx2N when the video format is YCbCr 4:2:0) of the chroma block as illustrated in **Figure 8.** The reconstructed luma samples of the luma L-shaped template are downsampled after filtering to match the size of chroma block. More precisely, the linear parameters $\alpha$ and $\beta$ are derived by minimizing Least Mean Square (LMS) error between the chroma samples of the model template and the reference samples of the model template.

CCLM of VVC is extended in ECM, by adding Multi-model LM (MMLM) modes (Kai Zhang et al., "Enhanced Cross-component Linear Model Intra-prediction", JVET, Chengdu, CN, 15-21 oct. 2016). In MMLM, the reference samples of the model template are classified into two classes using a threshold which is the average of the reference samples. The linear parameters of a linear model are derived for each class by minimizing Least Mean Square (LMS) error between chroma samples of the model template and reference samples of the model template of each class.

Sometimes due to local changes in the texture and brightness, it is useful to not use a part of the model template that is less correlated to current block (CU). One of the features of CCLM is a limited freedom in choosing the chroma and reference samples of the model template. In particular, only the top part of the chroma L-shaped template and of the luma L-shaped template) is used in the so-called MDLM_T_IDX mode and only the left part of the chroma L-shaped template and of the luma L-shaped template) is used in the so-called MDLM_L_IDX mode.

In MDLM_T_IDX mode, the top part of the chroma L-shaped template, respectively of the luma L-shaped templates may be extended to (W+H) samples where W and H indicate the size of the luma respectively chroma block (CU). In MDLM_L_IDX mode, the top part of the chroma L-shaped template and of the luma L-shaped templates is extended to (W+H) samples.

In ECM, the following CCLM consider a sample selection to derive a prediction of the chroma block:

- CHROMA_LM_IDX: single-model CCLM, with a chroma L-shaped template and the luma L-shaped template;

- MMLM_IDX: multi-model CCLM, with a chroma L-shaped template and the luma L-shaped template;

- MDLM_L_IDX: single-model CCLM, with only the left part of the chroma L-shaped template and the left part of the luma L-shaped template;

- MDLM T_IDX: single-model CCLM, with only the top part of the chroma L-shaped template and the top part of the luma L-shaped template;

- MMLM_L_IDX: multi-model CCLM, with only the left part of the L-shaped template and the left part of the luma L-shaped template;

- MMLM_T_IDX: multi-model CCLM, with only the top part of the L-shaped template and the top part of the luma L-shaped template.

In CCLM, the linear parameters $\alpha$ and $\beta$ are derived with at most four chroma samples of the model template and their corresponding reference samples of the model template. The number of reference samples of the model template given by W'xH' may be set as follow:

- W' = W, H' = H when CHROMA_LM_IDX (or MMLM_IDX) mode is applied;

- W' =W + H when MDLM_T_IDX (or MMLM_T_IDX) mode is applied;

- H' = H + W when MDLM_L_IDX (or MMLM_L IDX) mode is applied.

The positions of top reference samples of the model template may be denoted as S[0, -1 ]...S[ W' - 1, -1 ] and the positions of the left reference samples of the model template may be denoted as S[-1, 0 ]...S[ -1, H' - 1 ]. With these notations, the reference samples of the model template have positions S[.] defined as follow:

- S[W' / 4, -1 ], S[3 * W' /4, -1 ], S[-1, H' /4 ], S[-1, 3 * H' /4 ] when CHROMA_LM_IDX (or MMLM_IDX) mode is applied and both above and left reference samples of the model template are available;

- S[W' / 8, -1 ], S[3 * W' / 8, -1 ], S[5 * W' / 8, -1 ], S[7 * W' / 8, -1 ] when MDLM_T_IDX (or MMLM_T_IDX) mode is applied or only the top reference samples of the model template are available;

- S[ -1, H'/8], S[ -1, 3*H'/8], S[ -1, 5*H'/8], S[ -1, 7 * H' /8] when MDLM_L_IDX (or MMLM_L_IDX) mode is applied or only the left reference samples of the model template are available.

The reference samples of the model template at the selected positions are downsampled and the downsampled reference samples of the model template are compared together to find two larger sample values: $x^0_A$ and $x^1_A$, and two smaller samples values: $x^0_B$ and $x^1_B$. Their corresponding reconstructed chroma sample values are denoted as $y^0_A$, $y^1_A$, $y^0_B$ and $y^1B$.

Then $x_A$, $xe$, $y_A$ and $y_B$ are derived as:

$$X_a = (x^0_A + x^1_A + 1) >> 1; \quad X_b = (x^0_B + x^1_B + 1) >> 1;$$

$$y_a = (y^0_A + y^1_A + 1) >> 1; \quad y_b = (y^0_B + y^1_B + 1) >> 1$$

Finally, the linear parameters $\alpha$ and $\beta$ are obtained according to the following equations:

$$\alpha = \frac{Y_a - Y_b}{X_a - X_b}$$

$$\beta = Y_b - \alpha \cdot X_b$$

The division operation to calculate parameter $\alpha$ is implemented with a look-up table.

This parameter derivation is performed as part of both the encoding and the decoding of the current block. As a result, no syntax is used to convey the linear parameters $\alpha$ and $\beta$ values to the decoder.

To match the chroma sample locations for 4:2:0 video sequences, two types of down-sampling filter are applied to reference samples to achieve 2 to 1 down-sampling ratio in both horizontal and vertical directions. The selection of down-sampling filter is specified by a SPS (Sequence Parameter Set) level flag. The two down-sampling filters are as follows, which are corresponding to "type-0" and "type-2" content, respectively:

$$Rec'_L = \begin{bmatrix} rec_L(2i - 1, 2j - 1) + 2.rec_L(2i - 1, 2j - 1) + rec_L(2i + 1, 2j - 1) + \\ rec_L(2i - 1, 2j) + 2.rec_L(2i, 2j) + rec_L(2i + 1, 2j) + 4 \end{bmatrix}$$

$$\gg 3$$

$$rec'_L = \begin{bmatrix} rec_L(2i, 2j - 1) + rec_L(2i - 1, 2j) + 4.rec_L(2i, 2j) + \\ rec_L(2i + 1, 2j) + 2.rec_L(2i, 2j + 1) + 4 \end{bmatrix}$$

$$\gg 3$$

wherein i and j are indices of pixels on the x- and y-axis.

Another of existing cross-component prediction models is Gradient Linear Model (GLM). GLM is a variation of CCLM. Precisely, for YUV 4:2:0 color format, GLM can be used to predict the chroma samples of the model template from reference sample gradients of the model template (reconstructed luma sample gradients). Two modes are supported: a two-parameters-based GLM mode and a three-parameters-based GLM mode.

In two-parameters-based GLM, reference sample gradient $G_L(i, j)$ of the model template is computed for each reference sample (i,j) of the luma L-shaped template and the linear parameters $\alpha$ and $\beta$ are derived by minimizing Least Mean Square (LMS) error between chroma samples of the model template and reference sample gradients of the model template. The predicted chroma samples $pred_C(I, j)$ are given by using the linear model:

$$\mathrm{pred}_C(i,\ j) = \alpha \cdot G_L(i, j) + \beta$$

In three-parameters-based GLM, the predicted chroma samples $\mathrm{pred}_C(i, j)$ are given by using the linear model:

$$\mathrm{pred}_C(i,\ j) = \alpha_0 \cdot G_L(i,j) + \alpha_1 \mathrm{rec}_L^{\prime(i,\,j)} + \beta$$

The linear parameters $\alpha_0$, $\alpha_1$ and $\beta$ of the three-parameters-based GLM are derived from 6 rows and 6 columns adjacent samples by the LDL decomposition based MSE minimization method as used in the CCCM as discussed below.

Four Sobel-based gradient filters are enabled for the GLM to calculate the reference sample gradients $G_L(i, j)$ of the model template. The patterns of the gradient filters are shown in **Figure 9**.

For signaling, when the CCLM mode is enabled to the current block (CU), one flag is signaled to indicate whether GLM is enabled for chroma components. If GLM is enabled, another flag is signaled to indicate which of two-parameters-based GLM or three-parameters-based GLM is selected and one syntax element is further signaled to select one of 4 Sobel-based gradient filters.

Another of existing cross-component prediction models is Convolutional Cross-Component Model (CCCM). CCCM may apply to obtain predicted chroma samples $\mathrm{pred}_C(i, j)$ of chroma samples of a chroma block based on down-sampled reconstructed luma samples $\mathrm{rec}_L^{\prime}(i, j)$ of a co-located luma block of the chroma block in a similar spirit as done in CCLM. As with CCLM, the chroma samples of the model template are reconstructed chroma samples in a chroma L-shaped template around the chroma block and the reference samples of the model template are defined as being down-sampled reconstructed luma samples of a luma L-shaped template around the co-located luma block. Similar to CCLM top, left or top and left part of the L-shaped template are used as templates for deriving the CCCM model parameters. Also, similarly to CCLM, there is an option of using a single model or multi-model variant. The multi-model variant uses two models, one linear model whose linear parameters are derived from reference samples of the model template below an average value of the reference samples of the model template and another linear model whose linear parameters are derived from the rest of the reference samples of the model template (following the spirit of the CCLM design).

CCCM comprises a convolutional 7-tap filter that consists of a 5-tap plus sign shape spatial term, a nonlinear term P and a bias term B. The input to the spatial 5-tap term of the filter consists of a reference sample C which is co-located reconstructed luma sample of a chroma sample to be predicted and its above/north N, below/south S, left/west W and right/east neighbouring reference samples of the model template as illustrated in **Figure 10.** The nonlinear term P is represented as power of two of the reference sample C and scaled to the sample value range of the video content:

$$P = (\ C^*C + midVal\ ) >> bitDepth$$

That is, for 10-bit video content it is calculated as:

$$P = (\ C^*C + 512\ ) >> 10$$

The bias term B represents a scalar offset between the input and output (similarly to the linear parameter (offset term) $\beta$ in CCLM) and is set to middle chroma value (512 for 10-bit content).

Output of the convolutional 7-tap filter is calculated as a convolution between the 7 filter coefficients $c_i$ (the linear parameters of CCCM) and the 5 input reference samples N,S,E,W and C and the nonlinear term P and the bias term B:

$$predChromaVal = c_0C + c_1N + c_2S + c_3E + c_4W + c_5P + c_6B$$

Output of the convolutional 7-tap filter is clipped to the range of valid chroma samples.

The filter coefficients $c_i$ are derived by minimising MSE error between chroma samples of the model template and reference samples of the model template.

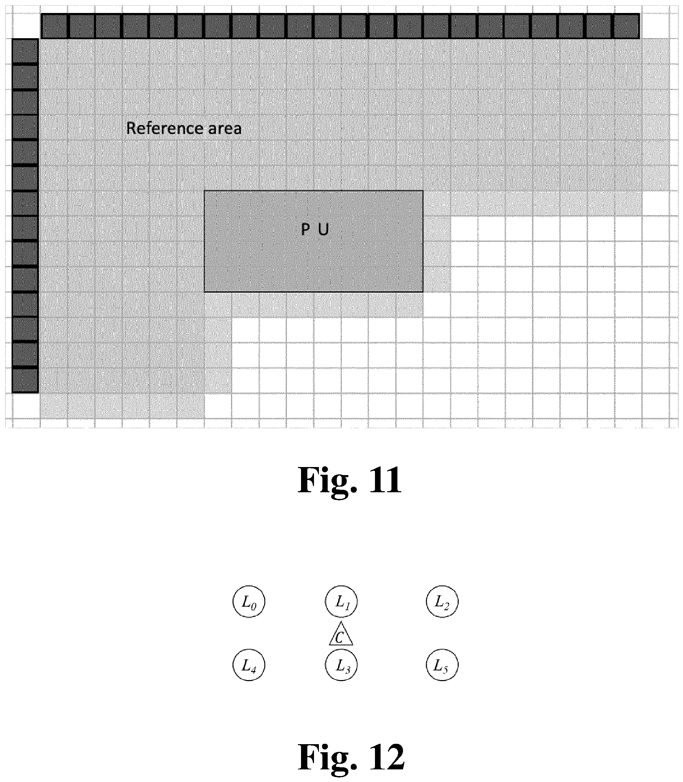

**Figure 11** shows an example of the chroma L-shaped template around the chroma block in accordance with prior art. The chroma samples of the chroma L-shaped template around the chroma block are chroma samples of the model template. In this example the chroma L-shaped template comprises the chroma samples located in the 6 top lines and of the 6 left columns. The chroma L-shaped template extends one chroma block width to the right and one chroma block height below the chroma block boundaries. The chroma L-shaped template is adjusted to include only available reconstructed chroma samples. The extensions to the chroma L-shaped template are needed to support the "side samples" of the plus shaped spatial filter and are padded in unavailable areas.

Whether to use 6 lines or 2 lines of chroma samples to derive the CCCM model parameters in the single model CCCM is determined by a template cost (section 3.1.13.2 of ECM). Similarly, for the multi-model CCCM mode, the two models use 6 lines luma samples to derive mean values which separate samples into two classes. The cost is derived by applying the candidate CCP (either 2 or 6 lines) (section 3.1.15 of ECM) on a luma L-shaped template, calculating the sum of absolute difference (SAD) between CCP predicted samples (section 3.1.15 of ECM) and reference samples in the luma L-shaped template. The MSE minimization is performed by calculating autocorrelation matrix for the luma input (reference sample) and a cross-correlation vector between the luma input and chroma output (chroma sample). Autocorrelation matrix is LDL decomposed (https://en.wikipedia.org/wiki/Cholesky_decomposition#LDL_decomposition) and the final filter coefficients are calculated using back-substitution. The process follows roughly the calculation of the ALF filter coefficients in ECM. However, LDL decomposition was chosen instead of Cholesky decomposition to avoid using square root operations. The autocorrelation matrix is calculated using the reconstructed values of chroma samples and reference samples of the model template. These samples are full range (e.g. between 0 and 1023 for 10-bit content) resulting in relatively large values in the autocorrelation matrix. This requires high bit depth operation during the model parameters derivation. Removing fixed offsets from luma and chroma samples in each CU for each model was proposed. This is driving down the magnitudes of the values used in the model creation and allows reducing the precision needed for the fixed-point arithmetic. As a result, 16-bit decimal precision was proposed to be used instead of the 22-bit precision of the original CCCM implementation. Luma and chroma reference samples just outside of the top-left corner of the CU are used as the offsets (offsetLuma, offsetCb and offsetCr) for simplicity. The chroma and luma samples values used in both model creation and final prediction (i.e., luma and chroma in the reference area, and luma in the current PU) are reduced by these fixed values, as follows:

C' = C - offsetLuma

N' = N - offsetLuma

S' = S - offsetLuma

E' = E - offsetLuma

W' = W - offsetLuma

P' = nonLinear(C')

B = midValue = 1 << (bitDepth - 1)

and the chroma value is predicted using the following equation, where offsetChroma is equal to offsetCr and offsetCb for Cr and Cb components, respectively:

$$predChromaVal = c_0C' + c_1N' + c_2S' + c_3E' + c_4W' + c_5P' + c_6B + offsetChroma$$

In order to avoid any additional sample level operations, the luma offset is removed during the luma reference sample interpolation. This can be done, for example, by substituting the rounding term used in the luma reference sample interpolation with an updated offset including both the rounding term and the offsetLuma. The chroma offset can be removed by deducting the chroma offset directly from the reference chroma samples. As an alternative way, impact of the chroma offset can be removed from the cross-component vector giving identical result. In order to add the chroma offset back to the output of the convolutional prediction operation the chroma offset is added to the bias term of the convolutional model.

The process of CCCM model parameter derivation requires division operations. Division operations are not always considered implementation friendly. The division operation are replaced with multiplication (with a scale factor) and shift operation, where scale factor and number of shifts are calculated based on denominator similar to the method used in calculation of CCLM parameters.

CCCM with 3x2 filter using non-downsampled luma samples may also be used. CCCM with 3x2 filter using non-downsampled luma samples consists of 6-tap spatial terms, four nonlinear terms and a bias term. The 6-tap spatial terms correspond to 6 reference samples (i.e., $L_0, L_1, ..., L_5$ of **Figure 9**) around the chroma sample (i.e., C) to be predicted, the four non-linear terms are derived from the luma samples $L_0, L_1, L_2,$ and $L_3$ as shown in **Figure 12.**

$$C = \sum_{i=0}^{5} \alpha_i \cdot (L_i - \text{offsetLuma}) + \sum_{i=6}^{9} \alpha_i \cdot (((L_{i-4} - \text{offsetLuma})^2 + \beta)$$

$$\gg bitDepth) + \alpha_{10} \cdot \beta + \text{offsetChroma}$$

Where $\alpha_i$ is the coefficient, $\beta$ is the offset. Same to the existing CCCM design, up to 6 lines/columns of chroma samples top and left to the current CU are applied to derive the filter coefficients. The filter coefficients are derived based on the same LDL decomposition method used in CCCM. The proposed method is signaled as an additional CCCM model besides the existing one, when the CCCM is selected, one single flag is signaled and used for both two chroma components to indicate whether the default CCCM model or the CCCM model is applied. Additionally, SPS signaling is introduced to indicate whether the CCCM using non-downsampled luma samples is enabled.

Based on the above existing technologies, in case of cross-component content inconsistencies, existing cross-component prediction models present drawbacks in term of compression.

For example, using LM_CHROMA_IDX mode treats all reference samples of the model template equally and obviously overlooks the existing cross-component content inconsistency and optimizes the linear model on all reference samples. This leads to compression inefficiency when the reference samples of the model template are not all consistent in terms of content with the corresponding chroma samples.

For example, using MDLM T_IDX mode leads to exclude from the model template used for deriving the linear parameters of CCLM, inconsistent reference samples (in term of content) located on the left part of the model template . But using MDLM_T_IDX mode makes an assumption that the reference samples located on the left part of the model template are not consistent (in term of content) with the corresponding chroma samples of the model template. This means that in case of a different form of cross-component content inconsistency, the parameters of the cross-component chroma prediction model will be derived based on inconsistent reference samples of the model template. Moreover, it requires additional signalling for selecting this mode. This prediction mode may lead to compression inefficiency.

For example, using multi-model mode, such as MMLM_CHROMA_IDX or MMLM_T_IDX leads to classify reference samples of the model template into different classes and to dedicate a dedicated cross-component model per class. Using MMLM_CHROMA_IDX, MMLM_T_IDX modes can flexibly classify the reference samples of the model template, but it still incorporates inconsistent reference samples of the model template in one of the models. Moreover, in cases where more than two distinct objects are present in the model template, the multi-model modes are limited only to two objects. Moreover, MMLM_CHROMA_IDX or MMLM_T_IDX requires additional signalling for selecting this mode. This prediction mode may lead to compression inefficiency.

Embodiments of the present disclosure relate to the cross-component prediction method of a chroma block of a video picture comprising a luma component and at least one chroma component. The method derives parameters of cross-component prediction models based on weighted reference samples in a model template defined around a co-located luma block of the chroma block to be predicted. The model template comprises chroma samples in a chroma L-shaped template around the chroma block to be predicted and the reference samples are reconstructed luma samples in a luma L-shaped template defined around the co-located luma block. An analysis template is obtained. The analysis template comprises reconstructed luma samples of a co-located luma block of the chroma block and the reference samples of a model template. The reference samples of the model template are split into at least two sub-sets of reference samples of the analysis template based on at least one detected variation in the reference samples of the analysis template. The weighted reference samples in the model template are obtained by weighing the reference samples of sub-sets of the analysis template that belong to the model template by weighting values, each weighting value being determined based on the content consistency between the reference samples of a sub-set of reference samples of the analysis template belonging to the model template and the reconstructed samples of the co-located luma block of the analysis template.

Weighting the reference samples of the sub-sets of the analysis template that belong to the model template based on the content consistency between the reference samples of sub-sets and the reconstructed samples of the co-located luma block, may be a pre-processing of any method for deriving parameters of any existing cross-component prediction model that relies on reference samples of a model template around the co-located luma block.

Embodiments of the present disclosure leads to a classification of the reference samples of the model template into at least two sub-sets and a cross-component prediction model may then be determined based on the weighted reference samples of each sub-set leading to better compression efficiency compared to cross-component prediction models based on reference samples comprising cross-component content inconsistencies.

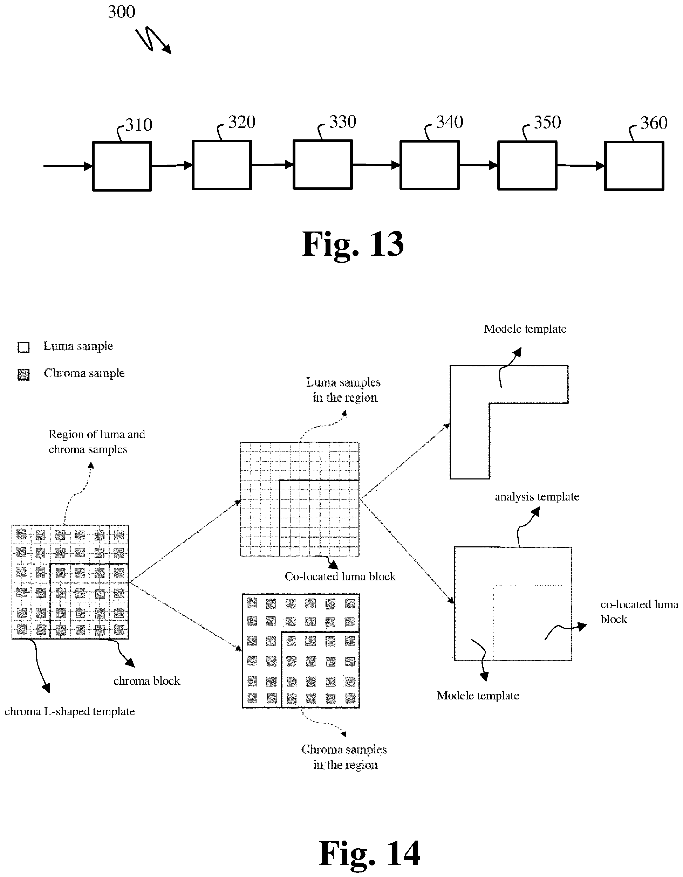

**Figure 13** shows a block diagram of a method 300 of cross-component prediction of a chroma block of a video in accordance with at least one exemplary embodiments of the present disclosure. For example, method 300 may be performed by an encoder or a decoder. In some examples blocks 320-360 may represent components within the encoder or the decoder. For example, blocks 320-360 may be sub-blocks of block 120 of method 100 or sub-blocks of block 250 of method 200.

At block 310, an analysis template is obtained. The analysis template comprises reference samples as being reconstructed luma samples of a co-located luma block of the chroma block and comprises reference samples of a model template. The model template comprises chroma samples in a chroma L-shaped template around the chroma block and corresponding reference samples as being reconstructed luma samples in a luma L-shaped template defined around the co-located luma block of the chroma block.

At block 320, at least one variation of the reference samples of the analysis template is detected, each variation of reference samples indicating a content cross-component inconsistency that has been identified by analyzing the reference samples of the analysis template.

At block 330, the reference samples of the analysis template are split into at least two sub-sets of reference samples based on the at least one detected variation in the reference samples of the analysis template.

At block 340, weighted reference samples of the model template are obtained by weighing the reference samples of sub-sets of the analysis template that belong to the model template by weighting values, each weighting value indicating the content consistency between the reference samples of one of the at least one sub-set belonging to the model template and the reconstructed samples of the co-located luma block of the analysis template.

At block 350, at least one cross-component prediction model is determined based on the weighted reference samples in the model template.

At block 360, the chroma block is predicted based on the at least one determined cross-component prediction model.

In some embodiments, a single cross-component prediction model may be determined (block 350) from all weighted reference samples.

In some embodiments, a cross-component prediction model may be determined (block 350) based on weighted reference samples corresponding to reference samples of one single sub-set that belong to the model template.

**Figure 14** shows an example of a set of reference samples corresponding to a chroma block of a YCbCr 4:2:0 video picture in accordance with at least one exemplary embodiments of the present disclosure.

A region of luma and chroma samples is illustrated. The region comprises a 4x4 chroma block of 16 chroma samples and a chroma L-shaped template defined around the chroma block. The chroma L-shaped template comprises chroma samples of the two above lines and the two left columns of the chroma block. A 8x8 co-located luma block comprises reference samples as being the 64 reconstructed luma samples. A model template may be defined from the chroma L-shaped template and from a luma L-shaped template defined around the co-located luma block. The model template comprises the chroma samples in the chroma L-shaped template and reference samples as being defined as the reconstructed luma samples in the luma L-shaped template. The reference samples of the model template correspond to the chroma samples of the model template. The analysis template may comprise the reference samples of the model template and the 64 reconstructed luma samples of the 8x8 co-located luma block.

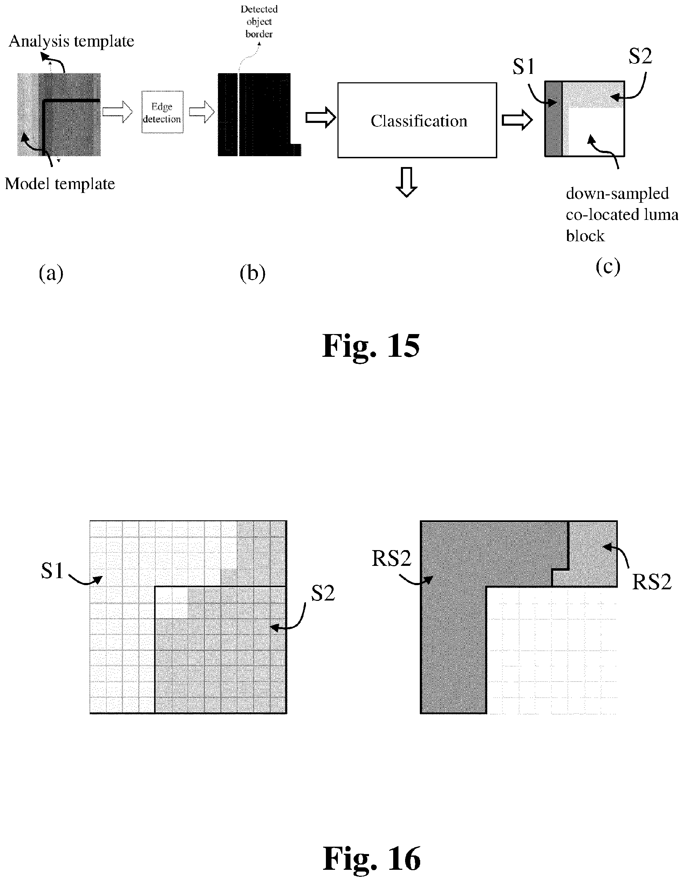

**Figure 15** shows an example of the method 300 in accordance with exemplary embodiments of the present disclosure.

A cross-component prediction mode has to be determined for a chroma (Cb, Cr) block of a YCbCr video picture. **Figure 16A** shows an example of analysis and model templates. For example, an edge detection filter is applied on the reference samples of the analysis template to detect cross-component content inconsistencies in the analysis template. One vertical edge is detected (**Figure 16B**). The reference samples of the model template are then split into a first S1 and second S2 sub-sets of reference samples of the analysis template (**Figure 16C**). The reference samples of sub-set S1 are less correlated in terms of content with the reconstructed luma samples of the co-located luma block (reference samples of the analysis template) than the reference samples of sub-set S2 because no edge has been detected between the sub-set S2 and the reconstructed luma samples of the co-located luma block. In other words, the reference samples of sub-set S2 have better cross-component content consistency with respect to the reconstructed luma samples of the co-located luma block than the reference samples of sub-set S1 with respect to the reconstructed luma samples of the co-located luma block. Weighted reference samples are obtained for the sub-sets by weighing the reference samples of the sub-sets, i.e. the reconstructed luma samples of the analysis template that belong to the model template, by weighting values. The weighting value associated with a sub-set S1 (or S2) is determined based on the content consistency between the reference samples of the sub-set S1 (or S2) and the reconstructed samples of the co-located luma block of the analysis template.

For example, the weighting value assigned to the reference samples of the sub-set S2 is higher than the weighting value assigned to the reference samples of the sub-set S1.

In some embodiments, a single cross-component prediction model may be determined based on all the weighted reference samples values for example of the subsets S1 and S2.

In some embodiments, a cross-component prediction model may be determined for each subset based on weighted reference samples corresponding to reference samples of one single sub-set that belong to the model template.

For example, a first cross-component prediction model may be determined based on the weighted reference samples of the first sub-set S1 that belong to the model template and a second cross-component prediction model may be determined based on the weighted reference samples of the second sub-set S2 that belong to the model template.

In some embodiments, detecting (block 320) the at least one variation of the reference samples of the analysis template may comprise applying an edge detection filter on the reference samples of the analysis template, and a variation of the reference samples of the analysis template is detected when an edge is detected in the reference samples of the analysis template.

For example, the edge detector filter is Sobel filter.

In some embodiments, detecting (block 320) the at least one variation of the reference samples of the analysis template may further comprise calculating edge strength for the at least one detected edge to evaluate how distinct are the reference samples along each side of the at least one detected edge.

In some embodiments, the edge strength of a detected edge may be computed using luma samples statistics (e.g. mean, variance of the reference samples) on each side of the detected edge.

For example, the edge strength of a detected edge may be calculated by first splitting the reference samples of the analysis template into a two sub-sets according to the belonging of the reference samples of the analysis template to one or other side of the detected edge. Then, first average luma of the reference samples of the first sub-set is calculated and second average luma of the reference samples of the second sub-set is calculated. Then the difference between the first and second average luma is compared against a pre-defined threshold. If the difference is higher than the threshold, then the detected edge is considered as strong, i.e. is a variation of the reference samples of the analysis template.

In some embodiments, detecting (block 320) the at least one variation of the reference samples of the analysis samples may further comprise partitioning of reference samples of the model template and/or reference samples of the analysis template.

This exemplary embodiment may be due to the fact that the reconstructed chroma samples and reference samples of the analysis template may not be yet filtered (e.g. Deblocking filter) at the stage of cross-component prediction. Therefore, it is quite likely that detected edges is rather due to the partitioning and not the objects borders. Consequently, this exemplary embodiment takes advantage of the partitioning information to further improve the determination of the cross-component chroma prediction model.

In some embodiments, detecting (block 320) the at least one variation of the reference samples of the analysis template may further comprise block partitioning and filtering the reference samples of the model template.

In some embodiments, detecting (block 320) the at least one variation of the reference samples of the analysis samples may further comprise block partitioning and filtering of the reconstructed chroma samples in the chroma L-shaped template.

In some embodiments, detecting (block 320) at least one variation of the reference samples of the analysis template may further comprise block partitioning and filtering the reference samples of the model template and block partitioning and filtering the reconstructed chroma samples in the chroma L-shaped template.

In some embodiments, detecting (block 320) at least one variation of the reference samples of the analysis template may further comprise modifying the reference samples of the analysis template.

In some embodiments, modifying the reference samples of the analysis template may comprise filtering the reference samples of the analysis template.

For example, a smoothing filter may be applied on the reference samples of the analysis template to remove detected edges in the reference samples of the analysis template.

For example, a deblocking filtering may be applied on the reference samples of the analysis template to deblock block boundaries in the reference samples of the analysis template.

For example, a denoising process may apply on the reference samples of the analysis template to remove noise from the reference samples of the analysis template.

In some embodiments, detecting (block 320) the at least one variation of the reference samples of the analysis template may further comprise modifying the reconstructed chroma samples of the chroma block and/or of the chroma L-shaped template around the chroma block.

In some embodiments, modifying the reconstructed chroma samples may comprise filtering the reconstructed chroma samples.

For example, a smoothing filter may be applied on the reconstructed chroma samples to remove edges detected in the reconstructed chroma samples.

For example, a deblocking filtering may be applied on the reconstructed chroma samples to deblock block boundaries in the reconstructed chroma samples.

For example, a denoising process may apply on the reconstructed chroma samples to remove noise from the reconstructed chroma samples.

In some embodiments, the weighting values may be obtained based on comparing the reconstructed luma samples in the model template to the reconstructed luma samples of the co-located luma block of the analysis template.

For instance, one might compute the mean luma value on the analysis template. Then, the distance of luma samples in the model template from the computed mean value determines the weighting value associated with the reference samples of the model template.

In some embodiments, a cross-component prediction model is one of the existing cross-component prediction models as discussed above and determining (block 350) the cross-component prediction model may comprise determining parameters of the cross-component prediction model based on the weighted reference samples. The derivation of the parameters of the cross-component prediction model uses the weighted reference samples rather than the reference samples as in prior art.

In some embodiments, a single weighting value may be assigned to each subset and the single weighting value may be assigned to each reference sample of the sub-set.

**Figure 16** shows an example of a set of reference samples in which a variation (an edge) is detected. The reference samples of the analysis template is split into a first sub-set S1 and a second sub-set S2, i.e. each reference sample of the analysis template is assigned to either the sub-set S1 or sub-set S2. This is a sample-based splitting. A first single weighting value is assigned with the reference samples RS1 of the sub-set S1 that belongs to the model template and a second single weighting value is assigned with the reference samples RS2 of the sub-set S2 that belong to the model template. In this example the second single weighting value may be bigger than the first single weighting value to indicate better content consistency between the reference samples RS2 of the sub-set S2 to the reconstructed luma samples of the co-located luma block.

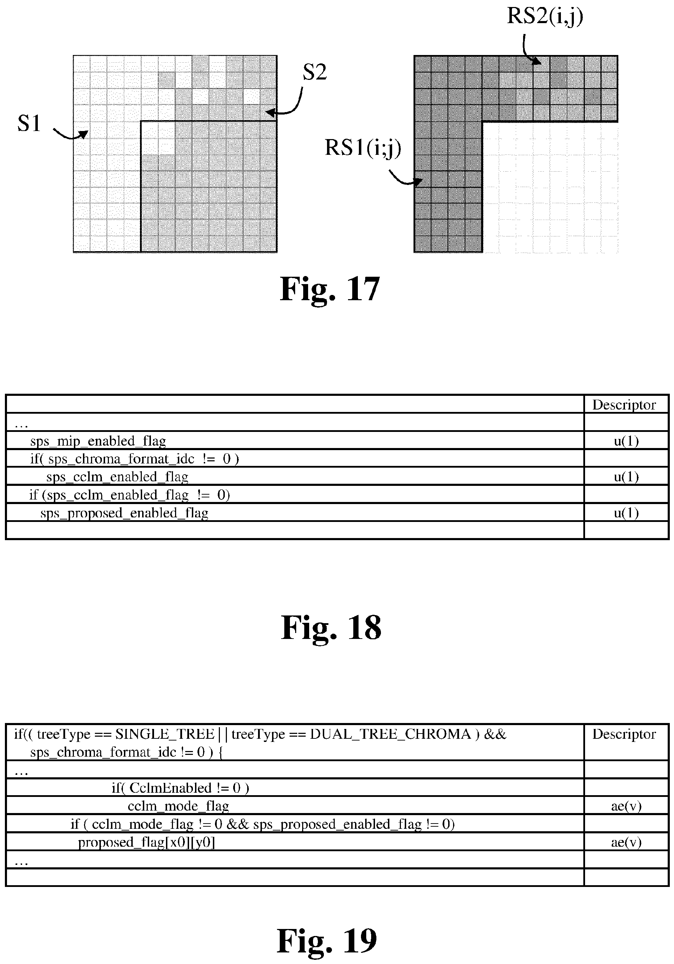

**Figure 17** illustrates an example of a set of reference samples in which a variation is detected. The reference samples of the analysis template is split into a first sub-set S1 and a second sub-set S2 based on a sample-based splitting A first single weighting value is assigned with the reference samples RS1 (i,j) of the sub-set S1 that belongs to the model template and a second single weighting value is assigned with the reference samples RS2(i,j) of the sub-set S2 that belongs to the model template. In this example the second single weighting value may be bigger than the first single weighting value to indicate better content consistency between the reference samples RS2 of the sub-set S2 to the reconstructed luma samples of the co-located luma block. This example shows that sub-sets of the analysis template may comprises non-adjacent reference samples of the analysis template.

In some embodiments, a weighting value may equal to 0 to indicate at least one reference sample of the model template is not considered for deriving the parameters of a cross-component prediction model.

In some embodiments, the MPM list may comprise at least one cross-component prediction model as determined based on weighted reference samples (method 300) and at least one cross-component prediction model determined as in prior art and the prediction mode p* for a chroma block is given by equation (1).

In some embodiment, method 300 may further comprise signaling an enabling information indicating the cross-component prediction model is determined based on weighted reference samples.

In some embodiments, the enabling information is signaled with High-Level Syntax (HLS) flags, such as Sequence Parameter Set (SPS), Picture Parameter Set (PPS), slice header etc.

In some embodiments, the enabling information is signaled at the CU-level.

**Figure 18** shows an example of signalling the enabling information as a flag **sps_proposed_enabled_flag** in the Sequence parameter set (SPS) of the codec.

**Figure 19** shows an example of signalling weighting values in the coding unit (CU) syntax of the codec when the enabling information **(sps_proposed_enabled_flag)** is active and indicates CCLM is enabled **(cclm_mode_flag).**

In some embodiments, enabling determining the at least one cross-component prediction model based on weighted reference samples is implicit (i.e. without signaling).

In some embodiments, determining whether determining the at least one cross-component prediction model is based on weighted reference samples is enabled or not, may be determined based on chroma or co-located luma block characteristics such as size, neighboring CUs, etc.

In some embodiments, determining the at least one cross-component prediction model is based on weighted reference samples is enabled to some of cross-component prediction modes as defined in prior art.

For example, the cross-component prediction model based on weighted reference samples may be enabled for only CCLM.

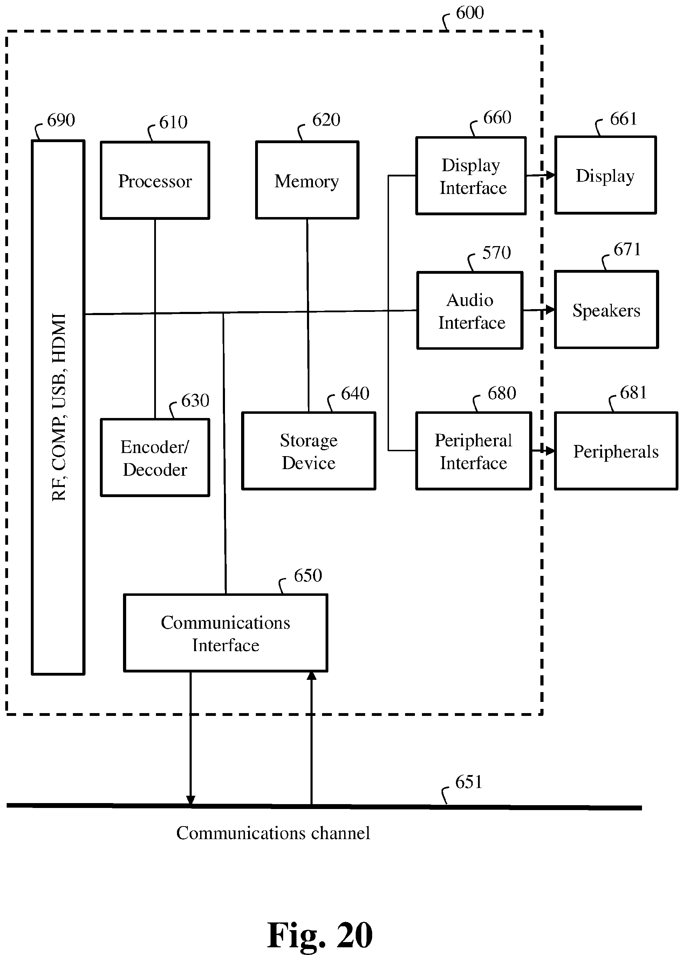

**Figure 20** shows a schematic block diagram illustrating an example of a system 600 in which various aspects and exemplary embodiments are implemented.

System 600 may be embedded as one or more devices including the various components described below. In various exemplary embodiments, system 600 may be configured to implement one or more of the aspects described in the present application.

Examples of equipment that may form all or part of the system 600 include personal computers, laptops, smartphones, tablet computers, digital multimedia set top boxes, digital television receivers, personal video recording systems, connected home appliances, connected vehicles and their associated processing systems, head mounted display devices (HMD, seethrough glasses), projectors (beamers), "caves" (system including multiple displays), servers, video encoders, video decoders, post-processors processing output from a video decoder, pre-processors providing input to a video encoder, web servers, video servers (e.g. a broadcast server, a videoon-demand server or a web server), still or video camera, encoding or decoding chip or any other communication devices. Elements of system 600, singly or in combination, may be embodied in a single integrated circuit (IC), multiple ICs, and/or discrete components. For example, in at least one exemplary embodiment, the processing and encoder/decoder elements of system 600 may be distributed across multiple ICs and/or discrete components. In various exemplary embodiments, system 600 may be communicatively coupled to other similar systems, or to other electronic devices, via, for example, a communications bus or through dedicated input and/or output ports.

System 600 may include at least one processor 610 configured to execute instructions loaded therein for implementing, for example, the various aspects described in the present application. Processor 610 may include embedded memory, input output interface, and various other circuitries as known in the art. System 600 may include at least one memory 620 (for example a volatile memory device and/or a non-volatile memory device). System 600 may include a storage device 640, which may include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random-Access Memory (DRAM), Static Random-Access Memory (SRAM), flash, magnetic disk drive, and/or optical disk drive. The storage device 640 may include an internal storage device, an attached storage device, and/or a network accessible storage device, as non-limiting examples.

System 600 may include an encoder/decoder module 630 configured, for example, to process data to provide encoded/decoded video picture data, and the encoder/decoder module 630 may include its own processor and memory. The encoder/decoder module 630 may represent module(s) that may be included in a device to perform the encoding and/or decoding functions. As is known, a device may include one or both encoding and decoding modules. Additionally, encoder/decoder module 630 may be implemented as a separate element of system 600 or may be incorporated within processor 610 as a combination of hardware and software as known to those skilled in the art.

Program code to be loaded onto processor 610 or encoder/decoder 630 to perform the various aspects described in the present application may be stored in storage device 640 and subsequently loaded onto memory 620 for execution by processor 610. In accordance with various exemplary embodiments, one or more of processor 610, memory 620, storage device 640, and encoder/decoder module 630 may store one or more of various items during the performance of the processes described in the present application. Such stored items may include, but are not limited to video picture data, information data used for encoding video picture data, a bitstream, matrices, variables, and intermediate or final results from the processing of equations, formulas, operations, and operational logic.

In several exemplary embodiments, memory inside of the processor 610 and/or the encoder/decoder module 630 may be used to store instructions and to provide working memory for processing that may be performed during encoding or decoding.

In other exemplary embodiments, however, a memory external to the processing device (for example, the processing device may be either the processor 610 or the encoder/decoder module 630) may be used for one or more of these functions. The external memory may be the memory 620 and/or the storage device 640, for example, a dynamic volatile memory and/or a non-volatile flash memory. In several exemplary embodiments, an external non-volatile flash memory may be used to store the operating system of a television. In at least one exemplary embodiment, a fast external dynamic volatile memory such as a RAM may be used as working memory for video coding and decoding operations, such as for MPEG-2 part 2 (also known as ITU-T Recommendation H.262 and ISO/IEC 13818-2, also known as MPEG-2 Video), AVC, HEVC, EVC, VVC, AV1, etc.

The input to the elements of system 600 may be provided through various input devices as indicated in block 690. Such input devices include, but are not limited to, (i) an RF portion that may receive an RF signal transmitted, for example, over the air by a broadcaster, (ii) a Composite input terminal, (iii) a USB input terminal, (iv) an HDMI input terminal, (v) a bus such as CAN (Controller Area Network), CAN FD (Controller Area Network Flexible Data-Rate), FlexRay (ISO 17458) or Ethernet (ISO/IEC 802-3) bus when the present invention is implemented in the automotive domain.

In various exemplary embodiments, the input devices of block 690 may have associated respective input processing elements as known in the art. For example, the RF portion may be associated with elements necessary for (i) selecting a desired frequency (also referred to as selecting a signal, or band-limiting a signal to a band of frequencies), (ii) down-converting the selected signal, (iii) band-limiting again to a narrower band of frequencies to select (for example) a signal frequency band which may be referred to as a channel in certain exemplary embodiments, (iv) demodulating the down-converted and band-limited signal, (v) performing error correction, and (vi) demultiplexing to select the desired stream of data packets. The RF portion of various exemplary embodiments may include one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down-converting the received signal to a lower frequency (for example, an intermediate frequency or a near-baseband frequency) or to baseband.

In one set-top box embodiment, the RF portion and its associated input processing element may receive an RF signal transmitted over a wired (for example, cable) medium. Then, the RF portion may perform frequency selection by filtering, down-converting, and filtering again to a desired frequency band.

Various exemplary embodiments rearrange the order of the above-described (and other) elements, remove some of these elements, and/or add other elements performing similar or different functions.

Adding elements may include inserting elements in between existing elements, such as, for example, inserting amplifiers and an analog-to-digital converter. In various exemplary embodiments, the RF portion may include an antenna.

Additionally, the USB and/or HDMI terminals may include respective interface processors for connecting system 600 to other electronic devices across USB and/or HDMI connections. It is to be understood that various aspects of input processing, for example, Reed-Solomon error correction, may be implemented, for example, within a separate input processing IC or within processor 610 as necessary. Similarly, aspects of USB or HDMI interface processing may be implemented within separate interface ICs or within processor 610 as necessary. The demodulated, error corrected, and demultiplexed stream may be provided to various processing elements, including, for example, processor 610, and encoder/decoder 630 operating in combination with the memory and storage elements to process the data stream as necessary for presentation on an output device.

Various elements of system 600 may be provided within an integrated housing. Within the integrated housing, the various elements may be interconnected and transmit data therebetween using suitable connection arrangement 690, for example, an internal bus as known in the art, including the I2C bus, wiring, and printed circuit boards.

The system 600 may include communication interface 650 that enables communication with other devices via communication channel 651. The communication interface 650 may include, but is not limited to, a transceiver configured to transmit and to receive data over communication channel 651. The communication interface 650 may include, but is not limited to, a modem or network card and the communication channel 651 may be implemented, for example, within a wired and/or a wireless medium.

Data may be streamed to system 600, in various exemplary embodiments, using a Wi-Fi network such as IEEE 802.11. The Wi-Fi signal of these exemplary embodiments may be received over the communications channel 651 and the communications interface 650 which are adapted for Wi-Fi communications. The communications channel 651 of these exemplary embodiments may be typically connected to an access point or router that provides access to outside networks including the Internet for allowing streaming applications and other over-the-top communications.

Other exemplary embodiments may provide streamed data to the system 600 using a set-top box that delivers the data over the HDMI connection of the input block 690.

Still other exemplary embodiments may provide streamed data to the system 600 using the RF connection of the input block 690.

The streamed data may be used as a way for signaling information used by the system 600. The signaling information may comprise the bitstream B and/or information such a number of pixels of a video picture and/or any coding/decoding setup parameters.

It is to be appreciated that signaling may be accomplished in a variety of ways. For example, one or more syntax elements, flags, and so forth may be used to signal information to a corresponding decoder in various exemplary embodiments.

System 600 may provide an output signal to various output devices, including a display 661, speakers 671, and other peripheral devices 681. The other peripheral devices 681 may include, in various examples of exemplary embodiments, one or more of a stand-alone DVR, a disk player, a stereo system, a lighting system, and other devices that provide a function based on the output of system 600.

In various exemplary embodiments, control signals may be communicated between the system 600 and the display 661, speakers 671, or other peripheral devices 681 using signaling such as AV.Link (Audio/Video Link), CEC (Consumer Electronics Control), or other communications protocols that enable device-to-device control with or without user intervention.

The output devices may be communicatively coupled to system 600 via dedicated connections through respective interfaces 660, 670, and 680.

Alternatively, the output devices may be connected to system 600 using the communications channel 651 via the communications interface 650. The display 661 and speakers 671 may be integrated in a single unit with the other components of system 600 in an electronic device such as, for example, a television.

In various exemplary embodiments, the display interface 660 may include a display driver, such as, for example, a timing controller (T Con) chip.

The display 661 and speaker 671 may alternatively be separate from one or more of the other components, for example, if the RF portion of input 690 is part of a separate set-top box. In various exemplary embodiments in which the display 661 and speakers 671 may be external components, the output signal may be provided via dedicated output connections, including, for example, HDMI ports, USB ports, or COMP outputs.

In **Figures 1-19,** various methods are described herein, and each of the methods includes one or more blocks or actions for achieving the described method. Unless a specific order of blocks or actions is required for proper operation of the method, the order and/or use of specific blocks and/or actions may be modified or combined.

Some examples are described with regard to block diagrams and/or operational flowcharts. Each block represents a circuit element, module, or portion of code which includes one or more executable instructions for implementing the specified logical function(s). It should also be noted that in other implementations, the function(s) noted in the blocks may occur out of the indicated order. For example, two blocks shown in succession may, in fact, be executed substantially concurrently or the blocks may sometimes be executed in the reverse order, depending on the functionality involved.

The implementations and aspects described herein may be implemented in, for example, a method or a process, an apparatus, a computer program, a data stream, a bitstream, or a signal. Even if only discussed in the context of a single form of implementation (for example, discussed only as a method), the implementation of features discussed may also be implemented in other forms (for example, an apparatus or computer program).

The methods may be implemented in, for example, a processor, which refers to processing devices in general, including, for example, a computer, a microprocessor, an integrated circuit, or a programmable logic device. Processors also include communication devices.

Additionally, the methods may be implemented by instructions being performed by a processor, and such instructions (and/or data values produced by an implementation) may be stored on a computer readable storage medium. A computer readable storage medium may take the form of a computer readable program product embodied in one or more computer readable medium(s) and having computer readable program code embodied thereon that is executable by a computer. A computer readable storage medium as used herein may be considered a non-transitory storage medium given the inherent capability to store the information therein as well as the inherent capability to provide retrieval of the information therefrom. A computer readable storage medium may be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present exemplary embodiments may be applied, is merely an illustrative and not an exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

The instructions may form an application program tangibly embodied on a processor-readable medium.

Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

An apparatus may be implemented in, for example, appropriate hardware, software, and firmware. Examples of such apparatus include personal computers, laptops, smartphones, tablet computers, digital multimedia set top boxes, digital television receivers, personal video recording systems, connected home appliances, head mounted display devices (HMD, seethrough glasses), projectors (beamers), "caves" (system including multiple displays), servers, video encoders, video decoders, post-processors processing output from a video decoder, pre-processors providing input to a video encoder, web servers, set-top boxes, and any other device for processing video pictures or other communication devices. As should be clear, the equipment may be mobile and even installed in a mobile vehicle.

Computer software may be implemented by the processor 610 or by hardware, or by a combination of hardware and software. As a non-limiting example, the exemplary embodiments may be also implemented by one or more integrated circuits. The memory 620 may be of any type appropriate to the technical environment and may be implemented using any appropriate data storage technology, such as optical memory devices, magnetic memory devices, semiconductor-based memory devices, fixed memory, and removable memory, as non-limiting examples. The processor 610 may be of any type appropriate to the technical environment, and may encompass one or more of microprocessors, general purpose computers, special purpose computers, and processors based on a multi-core architecture, as non-limiting examples.

As will be evident to one of ordinary skill in the art, implementations may produce a variety of signals formatted to carry information that may be, for example, stored or transmitted. The information may include, for example, instructions for performing a method, or data produced by one of the described implementations. -For example, a signal may be formatted to carry the bitstream of a described exemplary embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

The terminology used herein is for the purpose of describing particular exemplary embodiments only and is not intended to be limiting. As used herein, the singular forms "a", "an", and "the" may be intended to include the plural forms as well, unless the context clearly indicates otherwise. It will be further understood that the terms "includes/comprises" and/or "including/comprising" when used in this specification, may specify the presence of stated, for example, features, integers, blocks, operations, elements, and/or components but do not preclude the presence or addition of one or more other features, integers, blocks, operations, elements, components, and/or groups thereof. Moreover, when an element is referred to as being "responsive" or "connected" or "associated with" to another element, it may be directly responsive or connected to or associated with the other element, or intervening elements may be present. In contrast, when an element is referred to as being "directly responsive" or "directly connected" to or "directly associated with" other element, there are no intervening elements present.

It is to be appreciated that the use of any of the symbol/term "/", "and/or", and "at least one of", for example, in the cases of "A/B", "A and/or B" and "at least one of A and B", may be intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Various numeric values may be used in the present application. The specific values may be for example purposes and the aspects described are not limited to these specific values.

It will be understood that, although the terms first, second, etc. may be used herein to describe various elements, these elements are not limited by these terms. These terms are only used to distinguish one element from another. For example, a first element could be termed a second element, and, similarly, a second element could be termed a first element without departing from the teachings of the present application. No ordering is implied between a first element and a second element.

Reference to "one exemplary embodiment" or "an exemplary embodiment" or "one implementation" or "an implementation", as well as other variations thereof, is frequently used to convey that a particular feature, structure, characteristic, and so forth (described in connection with the exemplary embodiment/implementation) is included in at least one exemplary embodiment/implementation. Thus, the appearances of the phrase "in one exemplary embodiment" or "in an exemplary embodiment" or "in one implementation" or "in an implementation", as well any other variations, appearing in various places throughout the present application are not necessarily all referring to the same exemplary embodiment.

Similarly, reference herein to "in accordance with an exemplary embodiment/example/implementation" or "in an exemplary embodiment/example/implementation", as well as other variations thereof, is frequently used to convey that a particular feature, structure, or characteristic (described in connection with the exemplary embodiment/example/implementation) may be included in at least one exemplary embodiment/example/implementation. Thus, the appearances of the expression "in accordance with an exemplary embodiment/example/implementation" or "in an exemplary embodiment/example/implementation" in various places in the present application are not necessarily all referring to the same exemplary embodiment/example/implementation, nor are separate or alternative exemplary embodiment/examples/implementation necessarily mutually exclusive of other exemplary embodiments/examples/implementation.

Reference numerals appearing in the claims are by way of illustration only and shall have no limiting effect on the scope of the claims. Although not explicitly described, the present exemplary embodiments/examples and variants may be employed in any combination or sub-combination.

When a figure. is presented as a flow diagram, it should be understood that it also provides a block diagram of a corresponding apparatus. Similarly, when a figure is presented as a block diagram, it should be understood that it also provides a flow diagram of a corresponding method/process.

Although some of the diagrams include arrows on communication paths to show a primary direction of communication, it is to be understood that communication may occur in the opposite direction to the depicted arrows.

Various implementations involve decoding. "Decoding", as used in this application, may encompass all or part of the processes performed, for example, on a received video picture (including possibly a received bitstream which encodes one or more video picture) in order to produce a final output suitable for display or for further processing in the reconstructed video domain. In various exemplary embodiments, such processes include one or more of the processes typically performed by a decoder. In various exemplary embodiments, such processes also, or alternatively, include processes performed by a decoder of various implementations described in the present application, for example,

As further examples, in one exemplary embodiment "decoding" may refer only to de-quantizing, in one exemplary embodiment "decoding" may refer to entropy decoding, in another exemplary embodiment "decoding" may refer only to differential decoding, and in another exemplary embodiment "decoding" may refer to combinations of de-quantizing, entropy decoding and differential decoding. Whether the phrase "decoding process" may be intended to refer specifically to a subset of operations or generally to the broader decoding process will be clear based on the context of the specific description and is believed to be well understood by those skilled in the art.

Various implementations involve encoding. In an analogous way to the above discussion about "decoding", "encoding" as used in the present application may encompass all or part of the processes performed, for example, on an input video picture in order to produce an output bitstream. In various exemplary embodiments, such processes include one or more of the processes typically performed by an encoder. In various exemplary embodiments, such processes also, or alternatively, include processes performed by an encoder of various implementations described in this application.

As further examples, in one exemplary embodiment "encoding" may refer only to quantizing, in one exemplary embodiment "encoding" may refer only to entropy encoding, in another exemplary embodiment "encoding" may refer only to differential encoding, and in another exemplary embodiment "encoding" may refer to combinations of quantizing, differential encoding and entropy encoding. Whether the phrase "encoding process" may be intended to refer specifically to a subset of operations or generally to the broader encoding process will be clear based on the context of the specific descriptions and is believed to be well understood by those skilled in the art.

Additionally, the present application may refer to "obtaining" various pieces of information. Obtaining the information may include one or more of, for example, estimating the information, calculating the information, predicting the information, or retrieving the information from memory, processing the information, moving the information, copying the information, erasing the information, calculating the information, determining the information, predicting the information, or estimating the information.

Additionally, this application may refer to "receiving" various pieces of information. Receiving the information may include one or more of, for example, accessing the information, or receiving information from a communication network.

Also, as used herein, the word "signal" refers to, among other things, indicating something to a corresponding decoder. For example, in certain exemplary embodiments the encoder signals a particular information such as coding parameter or encoded video picture data. In this way, in an exemplary embodiment the same parameter may be used at both the encoder side and the decoder side. Thus, for example, an encoder may transmit (explicit signaling) a particular parameter to the decoder so that the decoder may use the same particular parameter. Conversely, if the decoder already has the particular parameter as well as others, then signaling may be used without transmitting (implicit signaling) to simply allow the decoder to know and select the particular parameter. By avoiding transmission of any actual functions, a bit savings is realized in various exemplary embodiments. It is to be appreciated that signaling may be accomplished in a variety of ways. For example, one or more syntax elements, flags, and so forth are used to signal information to a corresponding decoder in various exemplary embodiments. While the preceding relates to the verb form of the word "signal", the word "signal" may also be used herein as a noun.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A method (300) of cross-component predicting of a chroma block of a video picture comprising a luma component and at least one chroma component, the method comprising:

   obtaining (310) an analysis template comprising reference samples as being reconstructed luma samples of a co-located luma block of the chroma block and comprising reference samples of a model template, the model template comprising chroma samples in a chroma L-shaped template around the chroma block and corresponding reference samples as being reconstructed luma samples in a luma L-shaped template defined around the co-located luma block of the chroma block;

   detecting (320) at least one variation of the reference samples of the analysis template, each variation of reference samples indicating a content cross-component inconsistency in the reference samples of the analysis template;

   splitting (330) the reference samples of the analysis template into at least two sub-sets of reference samples based on the at least one detected variation in the reference samples of the analysis template;

   obtaining (340) weighted reference samples of the model template by weighing the reference samples of sub-sets of the analysis template that belong to the model template by weighting values, each weighting value indicating the content consistency between the reference samples of one of the at least one sub-set belonging to the model template and the reconstructed samples of the co-located luma block of the analysis template;

determining (350) at least one cross-component prediction model based on the weighted reference samples in the model template; and

predicting (360) the chroma block based on the at least one determined cross-component prediction model.

2. The method of claim 1, wherein a single cross-component prediction

model is determined from all weighted reference samples or

wherein a cross-component prediction model is determined for each subset based on weighted reference samples corresponding to reference samples of one single sub-set that belong to the model template.

3. The method of one of claims 1 to 2, wherein detecting (320) the at least one variation of the reference samples of the analysis template comprises applying an edge detection filter on the reference samples of the analysis template, and a variation of the reference samples of the analysis template is detected when an edge is detected in the reference samples of the analysis template.

4. The method of claim 3, wherein detecting (320) the at least one variation of the reference samples of the analysis template further comprises calculating edge strength for the at least one detected edge.

5. The method of one of claims 1 to 4, wherein detecting (320) the at least one variation of the reference samples of the analysis samples further comprises partitioning of reference samples of the model template and/or reference samples of the analysis template.

6. The method of one of claims 1 to 4, wherein detecting (320) the at least one variation of the reference samples of the analysis template further comprises block partitioning and filtering the reference samples of the model template.

7. The method of one of claims 1 to 6, wherein detecting (320) at least one variation of the reference samples of the analysis template further comprises modifying the reference samples of the analysis template.

8. The method of one of claims 1 to 7, wherein detecting (block 320) the at least one variation of the reference samples of the analysis template further comprises modifying the reconstructed chroma samples of the chroma block and/or of the chroma L-shaped template around the chroma block.

9. The method of one of claims 1 to 8, wherein the weighting values are obtained based on comparing the reconstructed luma samples in the model template to the reconstructed luma samples of the co-located luma block of the analysis template.

10. The method of one of claims 1 to 9, wherein a single weighting value is assigned to one sub-set and the single weighting value is assigned to each reference sample of the sub-set.

11. The method of one of claims 1 to 10, further comprising signaling an enabling information indicating the at least one cross-component prediction model is determined based on weighted reference samples.

12. The method of one of claims 1 to 10, wherein determining whether determining the at least one cross-component prediction model is based on weighted reference samples is enabled or not, is based on chroma or co-located block characteristics.

13. A method of encoding video picture data comprising a method according to one of claims 1 to 12.

14. A method of decoding video picture data comprising a method according to one of claims 1 to 13.

15. An apparatus comprising means for performing one of the methods claimed in any one of claims 1 to 14.

16. A computer program product including instructions which, when the program is executed by one or more processors, causes the one or more processors to carry out a method claimed in any one of claims 1 to 14.

17. A non-transitory storage medium carrying instructions of program code for executing a method claimed in any one of claims 1 to 16.

Video picture

Region with
cross-component
inconsistency

L-shaped template

current block

Y plane

Cb plane

Cr plane

# Fig. 1

## Fig. 2

NxN 2Nx2N Nx2N 2NxN

nLx2N nLx2N 2NxnU 2NxnD

## Fig. 3

**Fig. 4**

SBTV SBTH STTV STTH

**Fig. 5**

**Fig. 6**

**Fig. 7**

**Fig. 8**

**Fig. 9**

**Fig. 10**

# Fig. 11

# Fig. 12

300

# Fig. 13

Modele template

Luma samples
in the region

Region of luma and
chroma samples

□ Luma sample

▦ Chroma sample

analysis template

Co-located luma block

co-located luma
block

chroma block

Modele template

chroma L-shaped template

Chroma samples
in the region

# Fig. 14

Analysis template

Model template

Detected object border

Edge detection

Classification

S1  S2

down-sampled co-located luma block

(a)                    (b)                    (c)

# Fig. 15

S1  S2

RS2  RS2

# Fig. 16

**Fig. 17**

| | Descriptor |
|---|---|
| ... | |
| sps_mip_enabled_flag | u(1) |
| if( sps_chroma_format_idc != 0 ) | |
| sps_cclm_enabled_flag | u(1) |
| if (sps_cclm_enabled_flag != 0) | |
| sps_proposed_enabled_flag | u(1) |
| | |

**Fig. 18**

| if(( treeType == SINGLE_TREE \|\| treeType == DUAL_TREE_CHROMA ) && sps_chroma_format_idc != 0 ) { | Descriptor |
|---|---|
| ... | |
| if( CclmEnabled != 0 ) | |
| cclm_mode_flag | ae(v) |
| if ( cclm_mode_flag != 0 && sps_proposed_enabled_flag != 0) | |
| proposed_flag[x0][y0] | ae(v) |
| ... | |
| | |

**Fig. 19**

**Fig. 20**

# EP 4 576 776 A1

| | Europäisches Patentamt European Patent Office Office européen des brevets | **EUROPEAN SEARCH REPORT** | Application Number EP 23 30 7259 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2018/053293 A1 (QUALCOMM INC [US]) 22 March 2018 (2018-03-22) * paragraph [0044] * * paragraph [0127] - paragraph [0161] * * figures 8-10 * ----- | 1-17 | INV. H04N19/182 H04N19/186 H04N19/593 |
| X,D | ZHANG K ET AL: "Enhanced Cross-component Linear Model Intra-prediction", 4. JVET MEETING; 15-10-2016 - 21-10-2016; CHENGDU; (THE JOINT VIDEO EXPLORATION TEAM OF ISO/IEC JTC1/SC29/WG11 AND ITU-T SG.16 ); URL: HTTP://PHENIX.INT-EVRY.FR/JVET/,, no. JVET-D0110-v4, 17 October 2016 (2016-10-17), XP030150355, * abstract * * section 1 * * section 2.1 * ----- | 1-17 | |

| | | | TECHNICAL FIELDS SEARCHED (IPC) H04N |
|---|---|---|---|

The present search report has been drawn up for all claims

| Place of search | Date of completion of the search | Examiner |
|---|---|---|
| Berlin | 16 May 2024 | Kontopodis, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 30 7259

This annex lists the patent family members relating to the patent documents cited in the above-mentioned European search report.
The members are as contained in the European Patent Office EDP file on
The European Patent Office is in no way liable for these particulars which are merely given for the purpose of information.

16-05-2024

| Patent document cited in search report | Publication date | Patent family member(s) | Publication date |
|---|---|---|---|
| WO 2018053293 A1 | 22-03-2018 | BR 112019004544 A2 | 28-05-2019 |
| | | CN 109716771 A | 03-05-2019 |
| | | EP 3513559 A1 | 24-07-2019 |
| | | ES 2884375 T3 | 10-12-2021 |
| | | JP 7044765 B2 | 30-03-2022 |
| | | JP 2019530330 A | 17-10-2019 |
| | | KR 20190046852 A | 07-05-2019 |
| | | SG 11201900967X A | 29-04-2019 |
| | | TW 201817236 A | 01-05-2018 |
| | | US 2018077426 A1 | 15-03-2018 |
| | | WO 2018053293 A1 | 22-03-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KAI ZHANG et al.** Enhanced Cross-component Linear Model Intra-prediction. *JVET, Chengdu, CN, 15-21 oct. 2016*, 15 October 2016